# EUROPEAN PATENT SPECIFICATION

(11) **EP 2 944 577 B1**
(45) Date of publication and mention of the grant of the patent: **05.10.2016**
(21) Application number: 15001435.5
(22) Date of filing: 13.05.2015
(51) Int. Cl.: B65B 31/04, B65B 51/14, B29C 65/08, B29C 65/18, B29C 65/72, B29C 65/78, B29C 65/00, B31D 5/00, B65B 31/00, B65B 43/22, B65B 43/30, B65B 43/34, B65B 43/46, B65B 43/60, B65B 43/18, B65B 51/22, B65B 51/32, B65B 61/02, B65B 61/28, B65B 3/26

(54) **METHOD AND DEVICE FOR SEALING GAS IN A GAS COMPARTMENT-EQUIPPED BAG**
VERFAHREN UND VORRICHTUNG ZUR ABDICHTUNG VON GAS IN EINEM MIT EINEM GASRAUM AUSGESTATTETEN BEUTEL
PROCÉDÉ ET DISPOSITIF PERMETTANT DE GARANTIR L'ÉTANCHÉITÉ AUX GAZ DANS UN SAC ÉQUIPÉ D'UN COMPARTIMENT À GAZ

(30) Priority: 13.05.2014 JP 2014099452
(43) Date of publication of application: 18.11.2015
(73) Proprietor: Toyo Jidoki Co., Ltd., Tokyo (JP)
(72) Inventor: Honda, Yasuyuki, Iwakuni-shi Yamaguchi (JP); Tonozuka, Hiromasa, Yokohama-shi Kanagawa (JP)
(74) Representative: Schubert, Siegmar

(56) References cited:
- EP-A1- 0 661 208
- WO-A1-2006/121388
- WO-A1-2009/041911
- JP-A- 2009 012 800

## Description

### BACKGROUND OF THE INVENTION

### 1. Field of the Invention

The present invention relates to a method and device for sealing a gas in the gas compartment of a bag that is equipped with a gas compartment formed in the sealed portion of a side edge of the bag.

### 2. Description of the Related Art

Japanese Patent Nos. 4683899, 4771785, and 5104073 disclose a method that discharges a gas into the gas compartment of a gas compartment-equipped bag (a bag which is equipped with a gas compartment) then sealed the gas compartment In this gas compartment-equipped bag, the gas compartment that extends in the longitudinal direction of the bag is integrally formed in the sealed portion of the side edge of the bag, and a hole or cutout that communicates the outside of the bag with the inside of the gas compartment is formed in the film that forms the gas compartment. The films on the front and back sides of the bag are laminated films, with the inner layer composed of a sealant material. The inner layers of the front and back films are not heat-sealed together at the gas compartment portion and at the portion where the contents are inserted.

In the methods of Japanese Patent Nos. 4683899 and 4771785, for example, both side edges of the gas compartment-equipped bag are clamped by a pair of left and right grippers and intermittently conveyed along a predetermined conveyance path and, in the course of this conveyance, the discharge outlet of a gas-discharging nozzle connected to a pressurized gas supply source is placed against the hole or cutout, the rear face side of the bag is supported by a receiver, and gas is discharged from the nozzle into the gas compartment through the hole or cutout. After these steps, in the method of Japanese Patent No. 4683899, the area near the hole or cutout is sealed by a pair of hot plates while the discharging of gas is in progress, thus sealing the gas in the gas compartment. In the method of Japanese Patent No. 4771785, the area near the hole or cutout is clamped by a pair of blocking grippers while the discharging of gas is in progress, thus blocking off the flow of gas between the inside of the gas compartment and the hole or cutout, and then the part of the hole or cutout is sealed by a pair of hot plates while the gas blocked state is maintained, thus sealing the gas in the gas compartment. In Japanese Patent No. 5104073, it is presumed that the same method as in Patent No. 4683899 is employed.

The following problems are encountered with the gas sealing method disclosed in Japanese Patent Nos. 4683899 and 4771785.
(1) The method in Patent No. 4683899 requires a receiver and a gas-discharging nozzle for discharging a gas into a gas compartment, and a pair of hot plates for sealing the gas discharged into the gas compartment inside the gas compartment. The method in Japanese Patent No. 4771785 further requires blocking grippers for temporarily closing off the gas inside the gas compartment. The nozzle and receiver are moved back and forth between their extended positions and retracted position by, for instance, an air cylinder, and the pair of hot plates and the blocking grippers are opened and closed by a drive means that is a separate part from that for the nozzle and receiver. Thus, the device that performs the methods of Japanese Patent Nos. 4683899 and 4771785 includes a movable member and its drive means in addition to the nozzle and receiver, thus making the overall structure complicated.
   Generally, when a gas is discharged into and sealed inside the gas compartment of each of the bags equipped with gas compartments, both side edges of each bag are clamped by a pair of left and right grippers, and the bags are intermittently conveyed along a predetermined conveyance path. In such steps, if the type of bag equipped with a gas compartment changes, then it is possible that the position of the hole or cutout formed in the gas compartment of the bag clamped by the grippers (the position in the up and down direction or the horizontal direction) will be different from that of the bags processed before. If this happens, it becomes necessary to adjust the positions of the nozzle, the pair of hot plates and the blocking grippers, along with their respective drive devices, to the position of the hole or cutout of the gas compartment-equipped bag after the change. However, such adjustments are complicated work because there are so many places to adjust
(2) Japanese Patent No. 4683899 does not describe cooling that is done after sealing the area near the hole or cutout of the gas compartment with hot plates. If the sealed portion is not cooled; however, this may result in a diminished appearance (wrinkles, etc.) in the sealed portion and nearby portions, decreasing the strength in the sealed portion or creating other problems. These problems can be prevented if the sealed portion is clamped by a pair of cooling plates and cooled after being sealed with the hot plates; however, the installation of cooling plates (including a drive means therefor) further complicates the structure of the gas sealing device.
   Japanese Patent No. 4771785 discloses that after the hole or cutout part of the gas compartment is scaled with hot plates along with the bag mouth, the entire sealed portion, including the hole or cutout part, is clamped by cooling plates and cooled. According to this method, the above-described problems are prevented from occuning in the sealed portion (the hole or cutout part of the gas compartment). However, this method is only applicable when the hole or cutout is formed in the upper part of the bag (or a position above the pair of left and right grippers), due to the fact that the hole or cutout is sealed and cooled together with the bag mouth. Also, this method is only applicable when the sealing of the gas inside the gas compartment is performed following a packaging processing step (including opening of the bag mouth, filling with the contents, etc.).
(3) In the gas sealing method of Japanese Patent No. 4683899, the inflated gas compartment (or the area near the hole or cutout) is clamped by hot plates while the gas is being discharged into the gas compartment, and the gas is then sealed inside the gas compartment. During this process, the front and back films of the gas compartment (the sealed portion) clamped by the hot plates may not flatten out, resulting in that vertical wrinkles produce in the sealed portion and adversely affecting the appearance or in that the seal is imperfect that produces a gap on the inside, and the gas inside the gas compartment leaks out through this gap.

In the gas sealing method of Japanese Patent No. 4771785, the inflated gas compartment (near the hole or cutout) is clamped by blocking grippers while the gas is being discharged into the gas compartment, thus blocking the flow of gas through the hole of cutout and the inside of the gas compartment. During this process, the front and back films of the gas compartment (the blocking site) clamped by the blocking grippers may not flatten out, which can result in a gap on the inside of the gas compartment, and the gas inside the gas compartment may leak out until the site of the hole or cutout is clamped by hot plates and sealed.

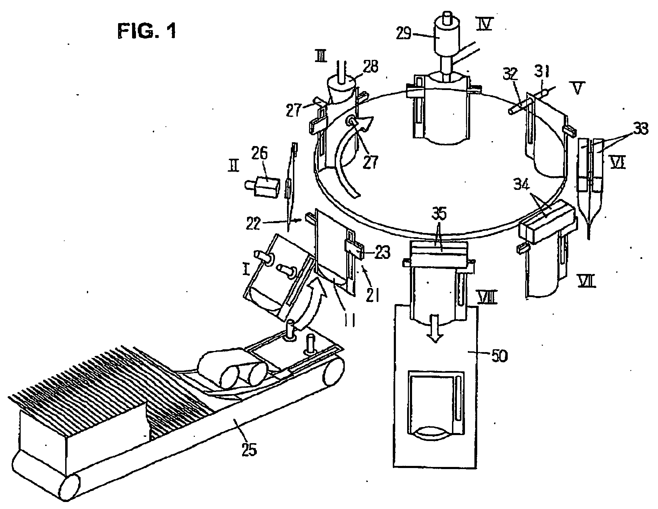

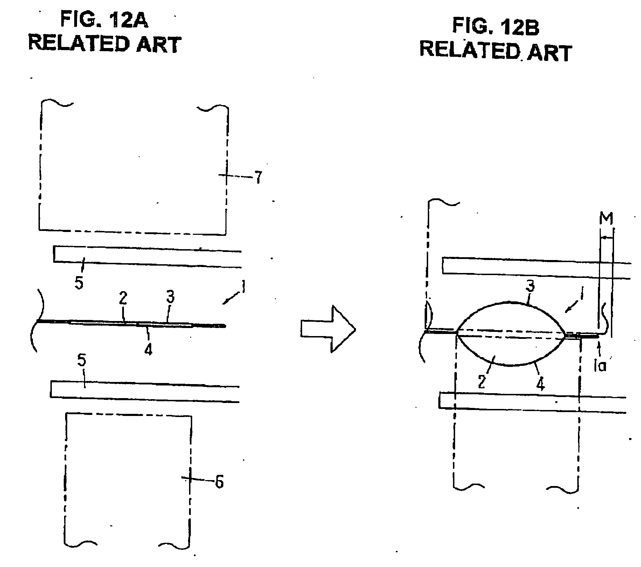

The above problems will now be described with reference to FIGS. 12A through 13B. First, in FIG. 12A, the reference numeral 1 is a sealed portion on one side edge, which is a part of a gas compartment-equipped bag (see Figure 1 of Japanese Patent No. 4771785), 2 is a gas compartment formed in the up and down direction between films 3 and 4 constituting the front and back faces of the sealed portion 1, 5 is a blocking gripper, 6 is a gas-discharging nozzle, and 7 is a receiver.

The gas compartment-equipped bag shown in FIG. 12A corresponds to the gas compartment-equipped bag (1) described in Japanese Patent No. 4771785, the gas compartment 2 corresponds to the gas compartment (5) (see Figure 1 of Japanese Patent No. 4771785 for these elements), and the blocking grippers 5, the nozzle 6, and the receiver 7 respectively correspond to the sub-grippers (7), the nozzle (11), and the receiver (12) of Japanese Patent No. 4771785 (see Figures 2 to 4 of Japanese Patent No. 4771785 for these elements). The gas compartment-equipped bag shown in FIG. 12A is clamped at both side edges by bag conveyance grippers (not shown but correspond to the grippers (8) of Japanese Patent No. 4771785) in the configuration shown in Figure 4 of Japanese Patent No. 4771785.

FIG. 12B shows the state when the nozzle 6 and the receiver 7 are moved forward from the retracted position shown in FIG. 12A, the distal end (the discharge outlet) of the nozzle 6 is placed against a hole or cutout formed in the gas compartment 2, the receiver 7 supports the rear face of the gas compartment 2 opposite the nozzle 6, and a gas is discharged into the gas compartment 2. The gas compartment 2 freely inflates under the gas pressure, which is accompanied by a pulling on the end Ia of the sealed portion 1 of the bag, and movement by a distance M toward the center of the gas compartment-equipped bag.

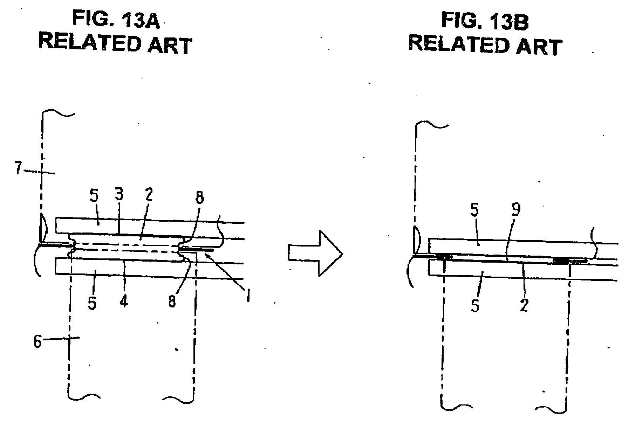

FIG. 13A shows the state when the blocking grippers 5 have been moved forward from the retracted position shown in FIG. 12A while a gas is being discharged in by the nozzle 6, and the area near the hole or cutout formed in the gas compartment 2 (the blocking site) is being clamped from both sides of the gas compartment-equipped bag. In the course of collapsing the inflated gas compartment 2 flat, any extra film bulges outward in the width direction of the gas compartment 2, which results in vertical wrinkles 8 on both sides of the gas compartment 2.

FIG. 13B shows the state that the blocking grippers 5 are closest together and have flattened out the gas compartment 2. The films of the gas compartment 2 are folded over onto the sealed portion 1 at the site of the vertical wrinkles 8 shown in FIG. 13A, the blocking grippers 5 cannot completely flatten out the blocking site of the gas compartment 2, and an extremely thin, flat gap 9 is, as a result, produced in the interior of the blocking site.

### BRIEF SUMMARY OF THE INVENTION

The present invention is made in light of the problems described above that were encountered with the art referred to.

It is a primary object of the present invention to provide a method and device that simplifies the configuration of a device that discharges a gas into the gas compartment of a gas compartment-equipped bag and then seals the gas inside the gas compartment, and further to provide a method and device that simplifies the adjustment work entailed when, for example, the type of gas compartment-equipped bag is changed.

It is another object of the present invention to provider a method and device that prevents gas leakage from the gas compartment caused by improper blocking or improper sealing of the gas compartment.

The above object is accomplished by the method of the present invention for sealing a gas in a gas compartment-equipped bag, wherein:
the method is for bags in which a gas compartment that extends in the longitudinal direction is integrally formed in the sealed portion of a side edge of each one of the bags, and this gas compartment-equipped bag in which a hole or a cutout that communicates the outside of the bag with the inside of the gas compartment is formed in the film of a gas introduction portion of the gas compartment,
the discharge outlet of a nozzle that is connected to a pressurized gas supply source is placed against the gas introduction portion of the bag, and
a gas is discharged into the gas compartment through the hole or cutout to inflate the gas compartment, and then the area near the hole or cutout is sealed to trap the gas inside the gas compartment; and
in the present invention,
the horn and anvil of an ultrasonic sealing device are disposed on either side of the gas compartment-equipped bag,
a gas passage is formed in the horn and/or the anvil such that one end thereof is connected to the pressurized gas supply source and another end thereof opens to the distal end of the horn and/or the anvil,
the horn and/or the anvil, in which the gas passage is formed, also function/functions as the nozzle,
the other end of the gas passage is the discharge outlet, and
the gas is discharged into the gas compartment by the horn and/or the anvil, and the films surrounding the hole or cutout are ultrasonically sealed by the horn and anvil.

In the above-described gas sealing method of the present invention, the hole or cutout may be formed in both the front and back films of the gas introduction portion or may be formed in only one film. If the hole or cutout is formed in either one of the front and back films of the gas introduction portion, then preferably both the horn and the anvil are used to function as the nozzle also (in addition to function to do sealing); however, only one of the horn or the anvil is able to function also as the nozzle. If the hole or cutout is formed in only one film of the gas introduction portion, then either one of the horn or the anvil (the side facing the film with the hole or cutout formed therein) also functions as the nozzle. If only one of the horn and the anvil functions as the nozzle also, then the other one serves as a receiver that receives and supports the rear surface of the gas compartment-equipped bag (see the receiver disclosed in Japanese Patent Nos. 4683899 and 4771785).

The above-described gas sealing method of the present invention can take the following manners:
(1) When a gas is discharged into the gas compartment, the distal ends of the horn and the anvil are opposite and face each other at a predetermined distance in between that is greater than the thickness of the films on both sides of the gas introduction portion, and when the films surrounding the hole or cutout are ultrasonically sealed, the horn and the anvil are moved forward (toward each other), and the films surrounding the hole or cutout are clamped by the distal ends of the horn and the anvil. This distance is preferably set to be slightly greater than the thickness of the films on both sides of the gas introduction portion, so that the films on both sides of the gas introduction portion inflated by the discharging of the gas come in close contact with the distal ends of the horn and the anvil, and the inflated state of the gas introduction portion is restricted to a flat shape (preventing any further inflation).
(2) The horn and the anvil are set to move back and forth with respect to the gas compartment-equipped bag, gas is discharged from the discharge outlet in a state that the hom and the anvil have been moved forward to clamp the films surrounding the hole or cutout at a specific biasing force, the pressure of the gas causes the horn and the anvil to retract against the biasing force, widening the distance between their distal ends, and then the films surrounding the hole or cutout are ultrasonically sealed. When the sealing is done in this manner, the horn and the anvil are again moved forward, so that the films surrounding the hole or cutout are clamped by the distal ends of the horn and the anvil. The distance between the distal ends of the retracted horn and anvil is the same as that described in (1) above and is preferably set to be slightly greater than the thickness of the films on both sides of the gas introduction portion. This restricts the inflation state of the gas introduction portion to a flat shape. The biasing force is set so that the horn and the anvil retract under the pressure of the gas as described above, and the distance between the distal ends of the retracted horn and anvil is set as described above.
   If an air cylinder is employed as the drive source for moving the horn and the anvil back and forth, the thrust of the air cylinder is applied to the above-described biasing force. In this case, the horn and the anvil can again be moved forward by either increasing the thrust of the air cylinder or by stopping the discharge of pressurized gas from the horn and the anvil or reducing the pressure of the pressurized gas.
(3) Gas is discharged from the discharge outlet in a state that the films surrounding the hole or cutout are being clamped by the distal ends of the horn and the anvil, and ultrasonic sealing is performed by supplying longitudinal vibration energy (vibration in a direction perpendicular to the welding face) to the horn.
   When ultrasonic vibration energy is supplied to the horn that is clamping the films, the horn is moved back and forth with respect to the anvil in a minute amplitude; and when the horn is retracted and widens the distance between the horn and the anvil, the films on both sides of the clamped part (the site clamped by the distal end faces of the horn and the anvil) are pushed apart by the pressure of the gas discharged from the discharge outlet, creating a minute gap between the films, and at that instant the gas flows through this gap into the gas compartment. As time passes, the gas compartment inflates, and then the sealant on the inside of the films melts and fills in the gap (at which point the flow of gas into the gas compartment stops), and the films on both sides of the clamped part are sealed. Although the ultrasonic vibration energy is supplied to the horn for only a very short time, both the discharging of gas into the gas compartment and the sealing of the gas compartment are both achieved during that time.
   In the above manner of functioning, it is preferable that the discharging of the gas from the discharge outlet be commenced and the gas be discharged into the gas compartment at a suitable point prior to the clamping of the films surrounding the hole or cutout is done by the distal ends of the horn and the anvil.
(4) Fine grooves can be formed in the distal ends/end of the horn and/or the anvil. In this structure, a gas is discharged from the discharge outlet in a state that the films surrounding the hole or cutout are being clamped by the distal end of the horn and/or the anvil having such grooves, and then vibration energy is supplied to the horn. In this case, the pressure of the gas discharged from the discharge outlet creates gaps between the films on both sides of the gas compartment on the inside of these grooves, and the gas is discharged through these gaps into the gas compartment. The width and depth of the grooves are set so that the gaps are produced by the pressure of the gas discharged from the discharge outlet, and the gaps are then filled in by the surrounding molten sealant.

The above object is further accomplished by the unique structure of the present invention for a device for sealing a gas in a gas compartment-equipped bag to carry out the above-described gas sealing method, and the device of the present invention includes:
a bag conveyance device that intermittently conveys gas compartment-equipped bags along the conveyance path, and
an ultrasonic sealing device that is provided near a predetermined stop position of the conveyance path, wherein
the hom and anvil of the ultrasonic sealing device are disposed opposite and face each other with the conveyance path in between (or on either side of the conveying path), and both are moved forward or backward toward the gas compartment-equipped bag that is stopped at the stop position,
a gas passage is formed in the horn and/or the anvil such that one end thereof is connected to a pressurized gas supply source and another end thereof opens to distal end thereof,
the horn and/or the anvil, in which the gas passage is formed, also function/functions as the nozzle,
the other end of the gas passage is the discharge outlet, and
the gas is discharged into the gas compartment by the horn and/or the anvil, and the films surrounding the hole or cutout are ultrasonically sealed by the horn and anvil.

In the above-described gas sealing device, the bag conveyance device preferably comprises a plurality of pairs of left and right bag conveyance grippers that grip both side edges of each of the gas compartment-equipped bags and are moved intermittently, thus intermittently conveying the gas compartment-equipped bags along the conveyance path.

In the bags processed by the above-described gas sealing device, the hole or cutout can be formed in both the front and back films of the gas introduction portion or can be formed in only one film. If the hole or cutout is formed in both the front and back films of the gas introduction portion, then preferably both the horn and the anvil of the gas sealing device are set to function as the nozzle also (in addition to function to do sealing); however, either one of the horn or the anvil can function as the nozzle also. If the hole or cutout is formed in only one film of the gas introduction portion, then either one of the horn or the anvil (the side facing the film with the hole or cutout formed therein) function as the nozzle also. If only one of the horn and the anvil also functions as the nozzle, then the other one serves as the receiver so as to hold the rear surface of the gas compartment-equipped bag (see the receiver discussed in Japanese Patent Nos. 4683899 and 4771785).

The above-described gas sealing device of the present invention can take the follow manner.
(1) The horn and the anvil are movable forward or backward between their extended positions and their retracted positions. When a gas is discharged into the gas compartment, the horn and the anvil are moved forward from the retracted positions and stop just short of the extended positions, and at this point the distal ends of the horn and the anvil are opposite and face each other at a predetermined distance that is greater than the thickness of the films on both sides of the gas introduction portion; and when the films surrounding the hole or cutout are ultrasonically sealed, the horn and the anvil are moved forward to their extended positions and clamp the films surrounding the hole or cutout, and after ultrasonic sealing the horn and the anvil are retracted to the retracted positions. This distance is preferably set to be slightly greater than the thickness of the films on both sides of the gas introduction portion, so that the films on both sides of the gas introduction portion inflated by the discharging in of the gas come in close contact with the distal ends of the horn and the anvil, and the inflated state of the gas introduction portion is restricted to a flat shape (preventing any further inflation).
(2) A drive source is installed for moving the horn and the anvil forward or backward. The drive source moves the horn and the anvil forward or backward between their extended positions and retracted positions, and the films surrounding the hole or cutout are clamped by them at a specific biasing force at the extended positions. When a gas is discharged into the gas compartment, the pressure of the gas causes the horn and the anvil to retract from their extended positions against the biasing force applied by the drive source, the distance between the distal ends of the horn and the anvil is widened to a predetermined distance that is greater than the thickness of the films on both sides of the gas introduction portion; and when the films surrounding the hole or cutout are ultrasonically sealed, the horn and the anvil are again moved forward to their extended positions, and after ultrasonic sealing, the horn and the anvil are retracted to the retracted position. The distance between the distal ends of the retracted horn and anvil after retracting under the pressure of the gas is the same as that described in (1) above, and is preferably set to be slightly greater than the thickness of the films on both sides of the gas introduction portion. This restricts the inflation state of the gas introduction portion to a flat shape. The biasing force is set so that the horn and the anvil are retracted under the pressure of the gas as described above, and the distance between the distal ends of the horn and the anvil after retraction is as described above.
   An air cylinder can be used as the drive source. If an air cylinder is used as the drive source, the thrust of the air cylinder is the above-described biasing force. The air cylinder can be a type that allows the thrust to be switched midway, for example, and the thrust when the films surrounding the hole or cutout are ultrasonically sealed is set to be greater than the initial thrust (this thrust is applied to the biasing force). In this case, the horn and the anvil are forward again to their extended positions by increasing the thrust of the air cylinder.
(3) The horn and the anvil are moved forward or backward between their extended positions and the retracted positions, the films surrounding the hole or cutout are clamped by the horn and the anvil at the their extended positions, a gas is discharged from the discharge outlet at the extended positions, longitudinal vibration energy is supplied to the horn so as to perform ultrasonic sealing with the anvil, and after the ultrasonic sealing, the horn and the anvil are retracted to the retracted position.
   When ultrasonic vibration energy is supplied to the horn that is clamping the film, the horn is, by the ultrasonic vibration energy, moved back and forth with respect to the anvil in a minute amplitude; and when the horn is retracted and the distance between the horn and the anvil is widened, the films on both sides of the clamped part are pushed apart by the pressure of the gas discharged from the discharge outlet, creating a minute gap, and at that instant the gas flows through this gap into the gas compartment. As time passes, the gas compartment inflates, and the sealant on the inside of the films melts and fills in the gap (at which point the flow of gas into the gas compartment stops), and the films on both sides of the clamped part are sealed.
   In the above manner of functioning, it is preferable that the discharging of the gas from the discharge outlet be commenced and the gas be discharged into the gas compartment at a suitable point prior to the clamping of the films surrounding the hole or cutout is done by the distal ends of the horn and the anvil.
(4) Fine grooves are formed in the distal ends/end of the horn and/or the anvil. The horn and the anvil having such grooves are moved forward or backward between their extended positions and the retracted positions, and the films surrounding the hole or cutout are clamped by the horn and the anvil when they are at the extended positions; a gas is then discharged from the discharge outlet in this state, vibration energy is supplied to the horn, the pressure of the gas discharged from the discharge outlet creates a gap between the films on both sides of the gas compartment on the inside of the grooves, the films surrounding the hole or cutout, including the portions inside of the grooves, are ultrasonically sealed, and after the ultrasonic sealing, the horn and the anvil are retracted to the retracted position.

The above-described gas sealing device can be configured as part of a packaging apparatus disclosed in Japanese Patent Nos. 4683899 and 4771785. In this case, the ultrasonic sealing device is added, at a suitable location near the conveyance path, to an ordinary packaging processing device that successively performs various packaging steps such as opening up the mouth of a gas compartment-equipped bag on the conveyance path, filling the bag with its contents, and sealing the bag mouth. Naturally, the gas sealing device can be also configured as an independent gas sealing device rather than part of the packaging apparatus.

As seen from above, according to the present invention, the gas-discharging nozzle, hot plates, and blocking grippers used in a conventional gas sealing method are replaced by a single ultrasonic sealing device, which simplifies the configuration of the gas sealing device. Also, simplifying the configuration of the gas sealing device simplifies the work entailed by adjusting the device, which is performed when the type of gas compartment-equipped bag is changed.

Generally, in ultrasonic sealing devices, the horn is air cooled, and the anvil is either water cooled or air cooled; accordingly, when the ultrasonic oscillation is stopped, the sealed portion of the bag is cooled immediately in a state that it is being clamped by the horn and the anvil. Accordingly, wrinkles or the like that are produced in the area of the sealed portion and adversely affect the appearance or decrease the strength of the sealed portion of a bag, and other such problems can be prevented.

Also, in the present invention, when a gas is discharged into the gas compartment, the distance between the distal ends of the horn and the anvil is set to be slightly greater than the thickness of the films on both sides of the gas introduction portion, and this can restrict the inflation state of the gas introduction portion to a flat shape. In addition, a gas is discharged into the gas compartment in a state that the films on both sides of the gas introduction portion are being clamped by the distal ends of the horn and the anvil, and the gas compartment is then sealed; and in this case, the occurrence of the vertical wrinkles (such as winkles 8 illustrated in FIGS. 12A through 13B) can be prevented. This also prevents leakage of the gas from the sealed gas compartment without sacrificing the appearance of the sealed portion.

### BRIEF DESCRIPTION OF THE SEVERAL VIEWS OF THE DRAWINGS

FIG. 1 is a simplified perspective view of a rotary packaging apparatus that includes the gas sealing device according to the present invention;
FIG. 2 is a side view of the ultrasonic sealing device according to the present invention;
FIGS. 3A to 3D are side views illustrating the order of steps taken in the gas sealing method according to the present invention;
FIGS. 4A and 4B are front views illustrating the order of steps taken in the gas sealing method of the present invention;
FIGS. 5A and 5B are front views illustrating the order of the next steps taken in the gas sealing method of the present invention;
FIGS. 6A to 6C are enlarged partial views illustrating the gas sealing method of the present invention;
FIGS. 7A to 7E are side views illustrating the order of steps taken in another manner of the gas sealing method according to the present invention;
FIGS. 8A and 8B are cross-sectional views of the horn and the anvil when the films surrounding the cutout formed in the gas introduction portion of the gas compartment of a bag are clamped by the horn and the anvil in the gas sealing method shown in FIG. 7, with FIG. 8A being the cross section view representing the state before ultrasonic vibration energy is supplied to the horn, and FIG. 8B representing the state after this supply has started;
FIGS. 9A to 9C are side views illustrating the order of steps taken in still another manner of the gas sealing method according to the present invention;
FIG. 10A is a front view of the horn and the anvil used in the gas sealing method shown in FIG. 9, and FIG. 10B is a detailed side view thereof;
FIG. 11 is a cross section of the horn and the anvil when the films surrounding the cutout formed in the gas introduction portion of the gas compartment are clamped by the horn and the anvil in the gas sealing method shown in FIG. 9;
FIG. 12A is a detailed cross sectional view showing before gas discharging in a gas sealing method of related art, and FIG. 12B is a detailed cross sectional view thereof during gas discharging; and
FIG. 13A is a detailed cross sectional view during clamping with blocking grippers in the gas sealing method of related art, and FIG. 13B is a detailed cross sectional view thereof after clamping.

### DETAILED DESCRIPTION OF THE INVENTION

Embodiments encompassed by the gas sealing method and device according to the present invention will be described below with reference to FIGS. 1 to 11.

### First Embodiment

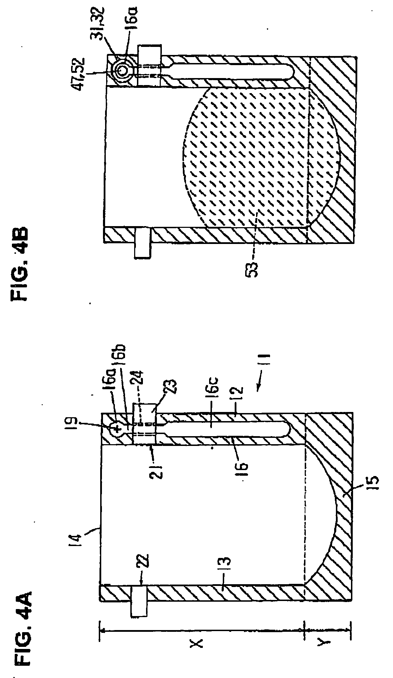

FIGS. 4A and 4B show a gas compartment-equipped bag 11 which is a bag equipped with a gas compartment formed in a sealed portion of a side edge of the bag (hereinafter referred to simply as the "bag 11") for which the gas sealing method and device of the present invention is used.

The bag 11 is a bottom gusset type of self-standing bag. The bag 11 is composed of films on both the front and back sides, and a folded-over bottom film. In the upper region X of the bag 11, the front and back films are bonded together at the side edges, forming sealed portions 12 and 13. The front and back films are not bonded at the upper edge, which becomes the open bag mouth 14. In the lower region Y of the bag 11, the front and back films are bonded together at the side edges with the bottom film sandwiched in between, and the bottom firm itself is also bonded at its folded-over inner side. In the middle part, the front and back films are bonded to the bottom film (the bottom film is not bonded to itself), forming a sealed portion 15. The sealed portions 12, 13, and 15 are indicated with hatching lines in FIGS. 4A and 4B.

The front and back films are not bonded together in part of the sealed portion 12, forming an unbonded portion 16 (or gas compartment 16).

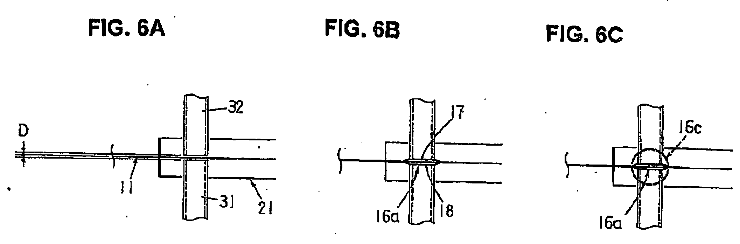

The gas compartment 16 is where no pressing or sealing is applied in the heat-sealing of the front and back films of the bag (see 17 and 18 in FIG. 6B), and it has a closed contour that extends in a slender shape downward from near the bag mouth 14 (the upper end of the sealed portion 12). In addition, near that upper end, a cross-shaped cutout (or a gas intake opening) 19 that communicates between the outside of the bag and the inside of the gas compartment 16 is formed in the front and back films. The gas compartment 16 comprises a narrow portion (or neck portion) 16b formed over a specific length from a circular gas introduction portion 16a, in the center of which the cutout 19 is formed, and a wider main portion 16c formed under this neck portion 16b.

FIG. 1 shows a rotary packaging apparatus in which the gas sealing device according to the present invention is included.

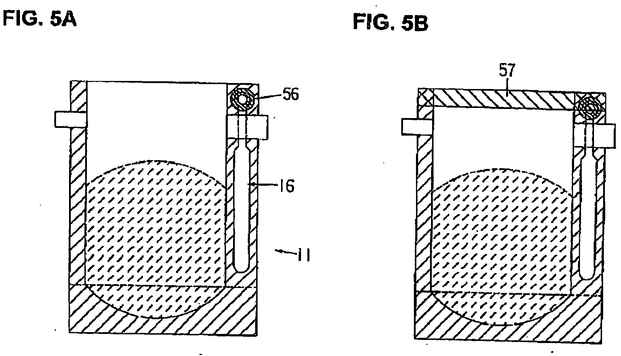

The rotary packaging apparatus shown in FIG. 1 is similar to the rotary packaging apparatus shown in Figure 5 of Japanese Patent No. 4683899. The rotary packaging apparatus of FIG. 1 includes a bag conveyance device in which a plurality of pairs of left and right bag conveyance grippers 21 and 22 are provide, equidistantly spaced, around an intermittently rotating table. In this bag conveyance device, the bag conveyance grippers 21 and 22 clamp the side edges (the sealed portions 12 and 13) of each of the supplied bags 1I and intermittently convey the hanging bags along a circular conveyance path. At the various stop positions where the bag conveyance grippers 21 and 22 make stops (stop positions I to VIII), after the bags 11 are supplied to the bag conveyance grippers 21 and 22, various packaging steps such as opening up the bag mouth, filling the bag with its contents, and sealing the bag mouth are successively performed on the bags 11 clamped by the bag conveyance grippers 21 and 22, and these bags are also subjected to the gas sealing method of the present invention that includes a step of discharging a gas in the gas compartment 16 and a step of sealing the gas compartment 16.

The bag conveyance grippers 21 and 22 each consist of a pair of grip pads, with the gripper 21 clamping the neck portion 16b of the gas compartment 16 so that it goes across it horizontally. As shown in FIG. 4A, a shallow groove 24 running in the up and down direction is formed on the inside (the clamping face) of one of the grip pads 23 of the gripper 21; and when the grippers 21 grips the sealed portion 12, the groove 24 superposes the neck portion 16b.

In the rotary packaging apparatus of FIG. 1, a conveyor magazine type of bag feeder 25 is disposed at the stop position I of the conveyance path, a printer (only a head 26 thereof is shown) is disposed at the stop position II, an opening device (only a pair of suction cups 27 and an opening head 28 thereof are shown) is disposed at the stop position III, a filling device (only a nozzle 29 thereof is shown) is disposed at the stop position IV, the ultrasonic sealing device according to the present invention (only a horn 31 and an anvil 32 thereof are shown) is disposed at the stop position V, a first sealing device that seals the bag mouth (only a pair of hot plates 33 thereof is shown) is disposed at the stop position VI, a second sealing device that seals the bag mouth (only a pair of hot plates 34 thereof is shown) is disposed at the stop position VII, and a cooling device (only a pair of cooling plates 35 thereof is shown) is disposed at the stop position VIII.

In the above-described rotary packaging apparatus, the bag conveyance device and the ultrasonic sealing device comprises the gas sealing device.

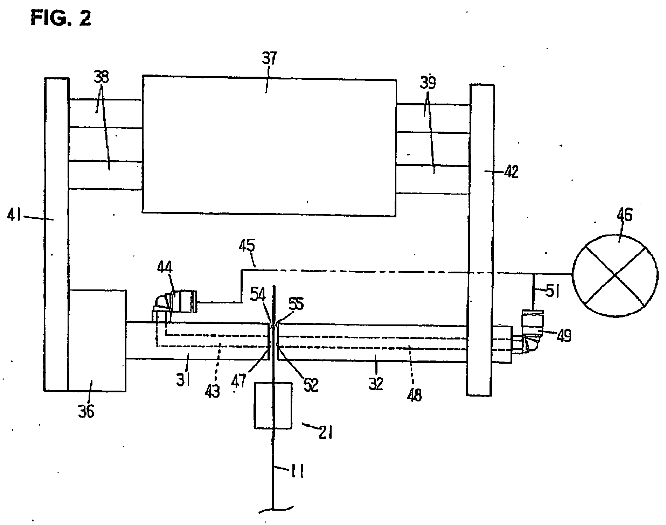

FIG. 2 shows the ultrasonic sealing device according to the present invention. This ultrasonic sealing device includes the horn 31, the anvil 32, an ultrasonic vibration generator 36 that vibrates the horn 31, and an air cylinder 37 that moves the horn 31 and the anvil 32 back and forth (or move them closer to and away from each other). Attachment members 41 and 42 are fixed to the distal ends of piston rods 38 and 39 of the air cylinder 37, the ultrasonic vibration generator 36 is fixed to the attachment member 41, and the anvil 32 is fixed to the attachment member 42. This ultrasonic sealing device has a cooling means (not shown), and the ultrasonic vibration generator 36, the horn 31, and the anvil 32 are cooled by this cooling means.

A hole 43 (gas passage) is formed in the horn 31. One end of the hole 43 opens in a side face of the horn 31 and is connected to a pressurized gas supply source 46 via a connector 44, a pipe 45, a shutoff valve (not shown), etc. The other end of the hole 43 opens in the distal end of the horn 31 and serves as a discharge outlet 47 for the pressurized gas. A hole 48 (gas passage) is formed in the anvil 32. One end of the hole 48 opens in the rear end of the anvil 32 and is connected to the pressurized gas supply source 46 via a connector 49 and a pipe 51. The other end of the hole 48 opens in the distal end of the anvil 32 and serves as a discharge outlet 52 for the pressurized gas.

With the structures above, the horn 31 and the anvil 32 also serve as gas-discharging nozzles (in addition to a ultrasonic sealing means).

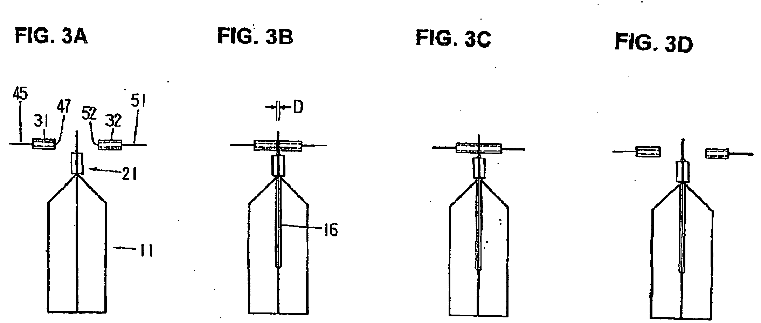

The horn 31 and the anvil 32 are disposed opposite and face each other with the conveyance path of the bag 11 in between, and they are moved forward (toward the conveyance path) or backward (away from the conveyance path) between their extended positions and the retracted positions, respectively, symmetrically and perpendicular to the bag 11, by the air cylinder 37. When the horn 31 and the anvil 32 are both in the retracted positions (see FIG. 3A), the horn 31 and the anvil 32 are farthest away from the conveyance path (and from each other), and this avoids interference with the bags 11 being conveyed along the conveyance path. When the horn 31 and the anvil 32 have come to their extended positions (see FIG. 3A), the horn 31 and the anvil 32 are closest to the conveyance path (and to each other), and the horn 31 and the anvil 32 clamp the bag 11 with their distal ends. At this time (when the horn 31 and the anvil 32 are at their extended positions and closest to the conveyance path and to each other), the distance between the distal ends of the horn 31 and the anvil 32 is equal to the thickness of the films on both sides of the gas introduction portion 16a of the gas compartment 16.

The air cylinder 37 is a three-position type, allowing the horn 31 and the anvil 32 to stop at an intermediate position thereof between the retracted positions and the extended positions. The intermediate position (hereinafter also referred to as a "discharging position") is a position that is extremely close to the extended position (see FIG. 3B and FIGS. 6A to 6C) of each of the horn and anvil, and a gas is discharged into the gas compartment 16 by the horn 31 and the anvil 32 that are stopped at their intermediate positions.

An example of a packaging method (including a gas sealing method) employed in the rotary packaging apparatus shown in FIG. 1 will be described with reference to FIGS. 1 to 6C.
(1) At the stop position I (bag feeding position), bags 11 are supplied from the conveyor magazine type of bag feeder 25 to the grippers 21 and 22, and the grippers 21 and 22 grip the sealed portions 12 and 13 at predetermined positions on both the front and back sides. The gas compartment 16 at this point is gripped at its neck portion 16b by the gripper 21. This state is shown in FIG. 4A.
(2) At the stop position II (printing position), the bag face is printed by a printer.
(3) At the stop position III (opening position), the bag is opened by an opening device. More specifically, the pair of suction cups 27 of the opening device are moved back and forth toward the bag 11, and when moved forward they grab the films on both sides of the bag 11, and then when moved backward they open the bag mouth 14. The opening head 28 moves up and down above the bag 11; and when it has descended, its lower end moves through the bag mouth 14 into the bag and discharges gas into the bag.
(4) At the stop position IV (content filling position), the opened bag is filled with, for instance, liquid contents by a filling device (see the contents 53 in FIG. 4B). The nozzle 29 of the filling device is movable up and down above the bag 11; and when it has descended, it goes through the bag mouth 14 into the bag and fills the bag with liquid.
(5) At the stop position V (gas discharging and sealing position), the ultrasonic sealing device shown in FIG. 2 is disposed near the conveyance path for the bag 11, and a gas discharging step that discharge a gas into the gas compartment 16 of the bag 11 and a sealing step that seals the films surrounding the cutout 19 are performed.

When the bag 11 is stopped at the stop position V, as shown in FIG. 3A, the horn 31 and the anvil 32 are at their retracted positions. The air cylinder 37 is then actuated and, as shown in FIGS. 3B and 6A, the horn 31 and the anvil 32 are moved forward and stop at positions (the discharging positions) just short of their extended positions. The distal ends of the horn 31 and the anvil 32 at this point are opposite and face each other and at a distance D that is slightly greater than the thickness of the films on both sides of the gas introduction portion 16a. As seen from FIG. 4B, the inside diameter (the diameter) of the discharge outlets 47 and 52 of the horn 31 and the anvil 32, respectively, is set to be less than the diameter of the gas introduction portion 16a of the gas compartment 16. Consequently, the gas discharged from the discharge outlets 47 and 52 collects in the gas introduction portion 16a, allowing the gas to be discharged into the gas compartment 16 more efficiently. If the gas introduction portion 16a is not circular, the inside diameter of the discharge outlets 47 and 52 can be set smaller than the width (which is in the bag width direction) of the gas introduction portion.

The discharging of the pressurized gas from the discharge outlets 47 and 52 is started either simultaneously with the stopping of the horn 31 and the anvil 32 at the discharging position or at a suitable point before or after that. When gas is discharged from the discharge outlets 47 and 52 through the cutout 19 and into the gas introduction portion 16a of the gas compartment 16, the films 17 and 18 on both sides of the gas introduction portion 16a inflate and, as shown in FIG. 6B, the films come in close contact with the flat distal end faces 54 and 55 of the horn 31 and the anvil 32, respectively (see FIG. 2). Therefore, the gas introduction portion 16a cannot inflate any further, and its inflation state is restricted to a thin, flat shape when viewed from above. The above-described distance D is set so that the inflation state of the gas introduction portion 16a becomes flat in shape.

The pressurized gas that enters the gas introduction portion 16a spreads open the front and back films of the neck portion 16b clamped by the gripper 21 by an amount equal to the depth of the groove 24, flows through the gap created between the films into the main portion 16c, and inflates the main portion 16c. A state in which the main portion 16c has inflated is shown in FIG. 6C.

The air cylinder 37 is again actuated at a specific timing after the horn 31 and the anvil 32 stop at their discharging positions, so that the horn 31 and the anvil 32 are moved forward and immediately reach their extended positions and, as shown in FIG. 3C, the distal ends of the horn 31 and the anvil 32 clamp the gas introduction portion 16a (the films surrounding the cutout 19) of the gas compartment 16. At this point, the inflation state of the gas introduction portion 16a is.a thin, flat shape, so that no wrinkles (see winkles 8 of FIG. 13) are produced, and the gas introduction portion 16a can be completely flattened out.

Next, ultrasonic vibration is generated from the ultrasonic vibration generator 36, and vibration energy is supplied to the horn 31. As shown in FIG. 5A, a ring-shaped ultrasonically sealed portion 56 (the ring-shaped area that is hatched) is formed coinciding with the shape of the area (clamped part) clamped by the horn 31 and the anvil 32 (reflecting the shape of the distal end face 54 of the horn 31). Although all or most of the cutout 19 of the gas introduction portion 16a is not sealed, the films surrounding the cutout 19 are sealed, so that the gas inside the gas compartment 16 is sealed (or trapped) inside, without leaking out through the cutout 19.

When the ultrasonic sealing is completed (when the generation of ultrasonic waves ends), there is no more frictional heat generated by ultrasonic vibration, and as a result the ultrasonically sealed portion 56 clamped by the distal ends of the horn 31 and the anvil 32 is immediately cooled by the horn 31 and the anvil 32. After the ultrasonic sealing ends, the air cylinder 37 is operated in reverse at a suitable timing, thus retracting the horn 31 and the anvil 32 until they stop at their retracted positions as shown in FIG. 3D.

The discharging of the pressurized gas from the discharge outlets 47 and 52 of the horn 31 and the anvil 32, respectively, is preferably continued until just before the horn 31 and the anvil 32 reach their extended positions and clamp the gas introduction portion 16a. Also, the discharging of the pressurised gas is preferably stopped at a suitable timing before the horn 31 and the anvil 32 start to retract.
(6) At the stop position VI (first sealing position), the pair of hot plates 33 clamp the bag mouth 14 and heat-seal it, forming a sealed portion 57 (see FIG. 5B). There is no need to clamp the site of the cutout 19 with the hot plates 33 at this point, since the sealing of the gas compartment 16 has already been completed.
(7) At the stop position VII (second sealing position), the pair of hot plates 34 again clamp the sealed portion 57 for a second round of heat sealing.
(8) At the stop position VIII (sealed portion cooling and discharge step), the pair of cooling plates 35 clamp and cool the sealed portion 57. Then, the grippers 21 and 22 are opened during cooling, then the cooling plates 35 are also opened, allowing the bag 11 (finished bag) to drop and be discharged through a chute 50 to outside the device.

### Second Embodiment

In the first embodiment above, the air cylinder 37 of the ultrasonic sealing device is a three-position type, and the horn 31 and the anvil 32 are stopped at three positions: the extended positions, the discharging positions, and the retracted positions. However, the air cylinder 37 can be a two-position type, so that the thrust that moves the horn 31 and the anvil 32 forward (which is the air pressure used) can be switched. With this two-position type cylinder as well, the discharging of the gas into the gas compartment 16 and the sealing of the gas compartment 16 (the gas introduction portion 16a) can be performed in the same manner as in the first embodiment above.

In this second embodiment that employs a two-position type cylinder, the discharging of the gas into the gas compartment 16 and the sealing of the gas compartment 16 are performed as follows, for example.

The horn 31 and the anvil 32 are moved forward under the operation of the air cylinder 37 until they reach their extended positions, so that the horn 31 and the anvil 32 clamp, with their distal ends, the gas introduction portion 16a of the gas compartment 16 (or the films surrounding the cutout 19) at a biasing force corresponding to the thrust of the air cylinder (the initial thrust).

When the horn 31 and the anvil 32 discharge pressurized gas from their discharge outlets 47 and 52, since the discharge outlets 47 and 52 are blocked by the film of the gas introduction portion 16a, the pressure of the gas rises, the horn 31 and the anvil 32 are retracted from their extended positions against the thrust of the air cylinder 37 (the biasing force that clamps the gas introduction portion 16a of the gas compartment 16), and the distance between the distal ends of the horn 31 and the anvil 32 is widened until it is slightly greater than the thickness of the films on both sides of the gas introduction portion 16a of the gas compartment 16. This distance may be about the same as the distance D described in the first embodiment of the gas sealing method above. In other words, the initial thrust of the air cylinder 37 is set so that the horn 31 and the anvil 32 are retracted under the pressure of the gas they themselves discharge, and the distance between the distal ends of the retracted horn 31 and anvil 32 is about the same as the above-described distance D.

The widening of the distance between the distal ends of the horn 31 and the anvil 32 causes the gas to be discharged through the cutout 19 into the gas introduction portion 16a, which inflates the films 17 and 18 on both sides of the gas introduction portion 16a and creates a gap between the films, and the gas flows into the neck portion 16b, and then into the main portion 16c, which inflates the main portion 16c. The films on both sides of the gas introduction portion 16a are brought into close contact with the flat distal end faces 54 and 55 of the horn 31 and the anvil 32 (see FIG. 6B), and the inflation state of the gas introduction portion 16a is restricted to a thin, flat shape.

The thrust of the air cylinder 37 is switched at a suitable timing (switched to a thrust that is greater than the initial thrust), so that the horn 31 and the anvil 32 are moved forward and again reach their extended positions, and the gas introduction portion 16a of the gas compartment 16 (the films surrounding the cutout 19) is clamped by the horn 31 and the anvil 32. Ultrasonic vibration is then generated from the ultrasonic vibration generator 36, and ultrasonic sealing is performed, forming the ring-shaped ultrasonically sealed portion 56 (see FIG. 5A).

After the ultrasonic sealing is finished, the air cylinder 37 is operated in reverse at a suitable timing, and the horn 31 and the anvil 32 are retracted and stop at the retracted positions.

The timing at which the discharging of the pressurized gas from the discharge outlets 47 and 52 is stopped can be the same as that in the first embodiment above.

### Third Embodiment

In the second embodiment above, when ultrasonic sealing is performed, the thrust of the air cylinder 37 is switched to a higher thrust, so that the horn 31 and the anvil 32 are moved forward again, and the gas introduction portion 16a of the gas compartment 16 is clamped. However, if the discharging of the pressurized gas is halted instead of switching the thrust in that way, the horn 31 and the anvil 32 can be likewise moved forward again so that the gas introduction portion 16a of the gas compartment 16 is clamped thereby.

If the discharging of the pressurized gas is halted, the thrust of the air cylinder 37 immediately moves the horn 31 and the anvil 32 forward so that they clamp the gas introduction portion 16a, and leakage of the gas form the cutout 19 stops. Also, since the neck portion 16b is formed in the gas compartment 16, and the distance is narrow between the films on both sides of the neck portion 16b (widening only to the depth of the groove 24 of the gripper 21), the leakage of gas inside the main portion 16c does not proceed all at once. Accordingly, the gas can be sealed inside the gas compartment 16 by ultrasonically sealing the gas introduction portion 16a. The pressure of the gas may be also reduced instead of halting the discharging of the pressurized gas.

### Fourth Embodiment

In the third embodiment above, the air cylinder 37 is used as the drive source for moving the horn 31 and the anvil 32 back and forth, and the thrust thereof is applied to the biasing force for clamping the gas introduction portion 16a of the gas compartment 16. Nonetheless, a compression spring (see the nozzle 17 and the compression spring 19 of Japanese Patent No. 4683899, for example) can be provided for biasing the horn 31 and the anvil 32 forward, thus applying the resilient force of this compression spring to the biasing force. In this case, the drive source for moving the horn 31 and the anvil 32 back and forth need not to be an air cylinder.

In this arrangement, the horn 31 and the anvil 32 are moved forward by the resilient force of the compression spring when the discharging of pressurized gas from the horn and the anvil is stopped, or the pressure of the pressurized gas is reduced.

### Fifth Embodiment

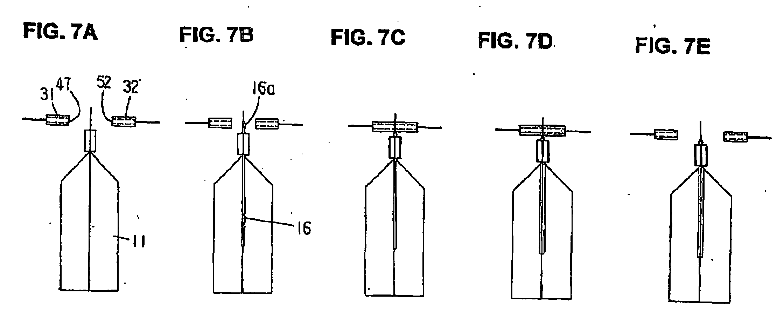

In the first embodiment described above, the air cylinder 37 of the ultrasonic sealing device is a three-position type; and when the gas is discharged into the gas compartment 16, the horn 31 and the anvil 32 are stopped at their discharging positions, at which point their distal ends are opposite and face each other at a predetermined distance (the distance D, which is slightly greater than the thickness of the films on both sides of the gas introduction portion 16a). In the fifth embodiment below, however, the horn 31 and the anvil 32 are stopped only at the extended positions and the retracted positions, and not at the discharging positions (positions just short of the extended positions). Therefore, the air cylinder 37 can be a two-position type. Also, in this fifth embodiment, longitudinal vibration energy (vibration perpendicular to the welding face) is supplied to the horn 31. The fifth embodiment is described below in specific terms with reference to FIGS. 7A through 8B (and also FIGS- 1 and 2).

When the bag 11 stops at the stop position V (see FIG. 1), the horn 31 and the anvil 32 are at their retracted positions as shown in FIG. 7A.

Then, the air cylinder 37 (see FIG. 2) is actuated to move the horn 31 and the anvil 32 forward from their retracted positions, and midway through this movement the discharging of the gas from the discharge outlets 47 and 52 in the distal ends of the horn 31 and the anvil 32 is begun.

As shown in FIG. 7B, as the horn 31 and the anvil 32 approach their extended positions, gas flows through the cutout 19 into the gas compartment 16, and inflates the gas compartment 16.

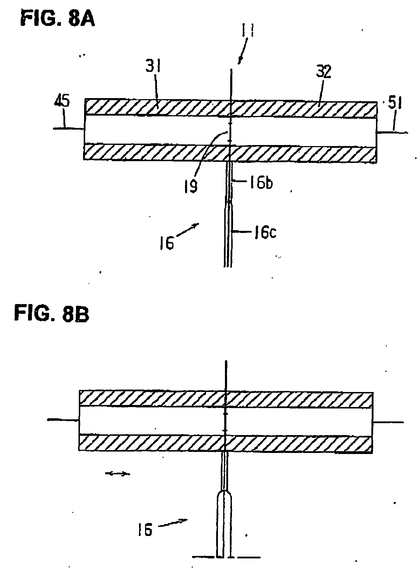

Then, as shown in FIGS. 7C and 8A, the horn 31 and the anvil 32 are moved to reach their extended positions, and their distal end faces 54 and 55 (see FIG. 2) clamp the films surrounding the cutout 19. Although the discharging of gas from the discharge outlets 47 and 52 continues, the flow of gas into the gas compartment 16 stops at this point. The horn 31 and the anvil 32 reach their extended positions from their retracted positions in an extremely short time, during which not enough of the gas is discharged into the gas compartment 16, and the gas compartment 16 is not sufficiently inflated at the point when the horn 31 and the anvil 32 reach their extended positions.

Next, ultrasonic longitudinal vibration energy is supplied to the horn 31. The horn 31 vibrates (moves back and forth with respect to the anvil 32) at a very small amplitude (from a few dozen to a few hundred microns (µm)) and a high frequency, and ultrasonic sealing is commenced. The vibration direction of the horn 31 is shown by the arrow in FIG. 8B. When the horn 31 has been retracted by the amount of the above-described amplitude and the distance between the horn 31 and the anvil 32 has widened, then the pressure of the gas discharged from the discharge outlets 47 and 52 pushes apart the films on both sides of the clamped part (the site clamped by the distal end faces 54 and 55 of the horn 31 and the anvil 32) and creates a very small gap, and at that instant the gas flows through this gap into the gas compartment 16.

As time passes, the amount of gas flowing into the gas compartment 16 increases, and the gas compartment 16 inflates accordingly (see FIGS. 7D and 8B), and then the sealant on the inner layer of the films is melted by frictional heat and fills in the gap (at which point the flow of gas into the gas compartment 16 again stops), so that the films on both sides of the clamped part are sealed. The ultrasonic vibration energy is supplied to the horn 31 for only a very short time (no more than 1.0 second, and usually about 0.2 to 0.4 second), and both the discharging of gas into the gas compartment 16 and the ultrasonic sealing of the gas compartment 16 are achieved during that time, and the gas is sealed inside the gas compartment 16. After this ultrasonic sealing, the discharging of gas from the discharge outlets 47 and 52 is stopped. The ultrasonically sealed portion is in the same ring shape as the shape of the distal end face 54 of the horn 31, just like that of the ultrasonically sealed portion 56 shown in FIG. 5A.

When the supply of vibration energy to the horn 31 is stopped and ultrasonic sealing is finished, no more frictional heat is generated in the ultrasonically sealed portion of the films. As a result, the ultrasonically sealed portion clamped by the distal ends of the horn 31 and the anvil 32 is immediately cooled by the horn 31 and the anvil 32. After the ultrasonic sealing thus ends, the air cylinder 37 is operated in reverse at a suitable timing, thus retracting the horn 31 and the anvil 32 until they stop at the retracted positions as shown in FIG. 7E.

Because the ultrasonic sealing generally lasts only an extremely short period of time, not much gas flows into the gas compartment 16 during this time. However, as described above, a certain amount of gas, although insufficient, is discharged into the gas compartment 16 before the films surrounding the cutout 19 are clamped by the horn 31 and the anvil 32; accordingly, in total a sufficient amount of gas is discharged into the gas compartment 16, and the gas compartment 16 can be sufficiently inflated.

With this fifth embodiment, the inflation state of the gas introduction portion 16a at the point when the gas introduction portion 16a is clamped by the horn 31 and the anvil 32 is in a flat shape (not inflated very much). Accordingly, the vertical wrinkles (such as winkles 8 illustrated in FIG. 12A) are prevented from occurring.

If the duration of the ultrasonic sealing can be extended for a relatively long time, a sufficient amount of gas is discharged into the gas compartment 16, and the gas compartment 16 can be sufficiently inflated during only the ultrasonic sealing period. In this case, the discharging of the gas from the discharge outlets 47 and 52 can be performed in the first half of the period from the start of ultrasonic sealing to the end (until the flow of gas into the gas compartment 16 stops). For example, the discharging of gas can be started to match (be simultaneous with) the timing of the start of ultrasonic sealing and ended before. the end of the ultrasonic sealing. However, as described above, since the ultrasonic sealing generally lasts only an extremely short time, it is practical to start the discharging of the gas at a suitable point before the films surrounding the cutout 19 are clamped by the horn 31 and the anvil 32, and leave it to continue until the ultrasonic sealing ends.

### Sixth Embodiment

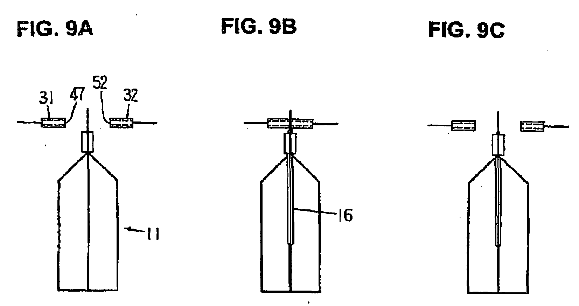

In the fifth embodiment above, the distal end faces 54 and 55 of the horn 31 and the anvil 32 are flat. In the sixth embodiment below, fine grooves are formed in the distal end faces 54 and/or 55 of the horn 31 and/or the anvil 32. The sixth embodiment will be described below in specific terms with reference to FIGS. 9A through 11.

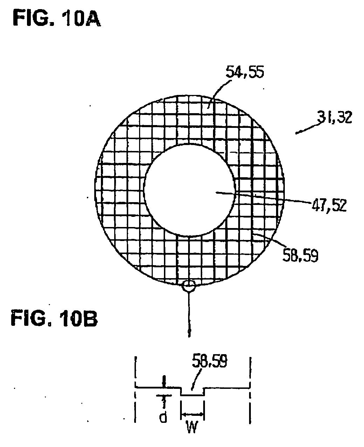

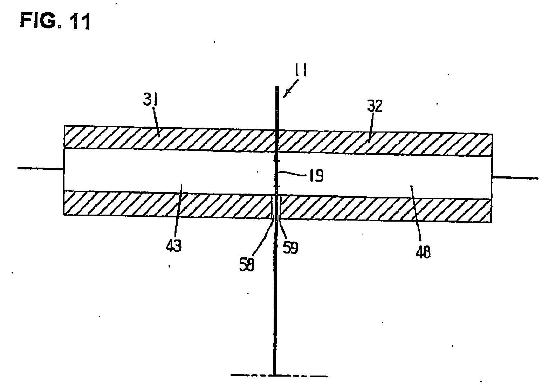

As shown in FIGS. 10 and 11, fine, lattice-like grooves 58 and 59 whose ends open to the inner periphery (the discharge outlets 47 and 52) and/or the outer periphery of the distal end faces 54 and 55 of the horn 31 and the anvil 32 are formed over the entire surface of the distal end faces 54 and 55 (the groove 58 are on the end surface 54 of the horn 31, and the grooves 59 are on the end surface 55 of the anvil 32). The discharging of the gas into the gas compartment 16 and the ultrasonic sealing of the gas compartment 16 using the horn 31 and the anvil 32 are performed as follows, for example.

When the bag 11 stops at the stop position V (see FIG. 1), as shown in FIG. 9A, the horn 31 and the anvil 32 are retracted to the retracted positions.

The air cylinder 37 is actuated (see FIG. 2), and the horn 31 and the anvil 32 are moved forward (or toward each other) from their retracted positions and reach the extended positions and, as shown in FIG. 9B, their distal ends clamp the films surrounding the cutout 19 formed in the gas introduction portion 16a of the gas compartment 16, and then gas is discharged from the discharge outlets 47 and 52 in the distal ends of the horn 31 and the anvil 32, respectively.

The gas that goes through the cutout 19 into the gas introduction portion 16a pushes apart the films of the gas introduction portion 16a within the grooves 58 and 59, creating numerous small gaps between the films on both sides. The gas flows through these gaps into the neck portion 16b that lies ahead of the gas introduction portion 16a then flows further into the main portion 16c, inflating the gas compartment 16. However, the films surrounding the cutout 19 are not inflated while still clamped by the distal ends of the horn 31 and the anvil 32 and are only pushed apart slightly within the grooves 58 and 59.

Next, ultrasonic vibration is generated from the ultrasonic vibration generator 36 at a specific timing, and the ultrasonic vibration energy is supplied to the horn 31, and the films on both sides of the site clamped by the distal ends of the horn 31 and the anvil 32 (the area around the cutout 19) are ultrasonically sealed. In this ultrasonic sealing, there are small gaps between the films on both sides on the inside of the grooves 58 and 59; as a result, no frictional heat is generated and the sealant of the inner layer does not melt. Nonetheless, the nearby molten sealant fills in these gaps (at which point the flow of gas into the gas compartment 16 stops), and sealing is performed, including the films inside of the grooves 58 and 59, which seals or traps the gas inside the gas compartment 16. If the vibration energy supplied to the horn 31 is longitudinal vibration energy, the action discussed in the fifth embodiment above (whereby vibration of the horn 31 forms minute gaps between the films on both sides of the clamped part, and the gas flows through these gaps into the gas compartment 16) is also obtained at the same time.

As seen from FIG. 10, the width w and depth d of the grooves 58 and 59 formed in the distal end faces 54 and 55 of the horn 31 and the anvil 32 are set so that the above-described gaps are formed when gas is discharged into the gas compartment 16, and these gaps are filled in by the surrounding molten sealant during ultrasonic sealing.

The ultrasonically sealed portion thus produced is in the same ring shape as the shape of the distal end face 54 of the horn 31, just like that of the ultrasonically sealed portion 56 shown in FIG. 5A.

When the ultrasonic sealing ends (when the generation of ultrasonic waves ends), there is no more frictional heat generated by ultrasonic vibration, and the ultrasonically sealed portion clamped by the distal ends of the horn 31 and the anvil 32 is immediately cooled by the horn 31 and the anvil 32. After the ultrasonic sealing thus ends, the air cylinder 37 is operated in reverse at a suitable timing, which retracts the horn 31 and the anvil 32 until they stop at their retracted positions as shown in FIG. 9C. The discharging of gas from the discharge outlets 47 and 52 can be ended before the ultrasonic sealing ends, as described for the fifth embodiment above; however, it is practical to keep it continue until the ultrasonic sealing ends.

With this sixth embodiment, the gas compartment 16 that has not yet been inflated is clamped by the horn 31 and the anvil 32, gas is discharged into the gas compartment while it is still being clamped, and ultrasonic sealing is performed in this state. Accordingly, there is no way for the vertical wrinkles 8 illustrated in FIG. 12A to occur.

Also, in this sixth embodiment, unlike in the fifth embodiment above, the ultrasonic vibration energy supplied to the horn 31 may be some other vibration mode, such as lateral vibration or torsional vibration, rather than longitudinal vibration. This is also applicable to the first to fourth embodiments above.

In this sixth embodiment, the discharging of gas from the discharge outlets 47 and 52 can be, as in the fifth embodiment, started at a suitable timing before the film surrounding the cutout 19 is clamped by the horn 31 and the anvil 32.

Although the first to sixth embodiments of the present invention are described above with reference to FIGS. 1 to 11, the present invention can be embodied in different manners as below:
(1) In the above description, both the horn 31 and the anvil 32 also serve as gas-discharging nozzles in addition to as sealing means. However, when the gas is discharged into the gas compartment 16, only one of these can be used as a nozzle (to discharge gas), with the other being used as a receiver (that does not discharge gas and only receives and holds the gas compartment 16) (see, for instance, the receiver 12 described in Japanese Patent No. 4771785). Also, the gas passage (including discharge outlets) need not to be formed on the horn 31 or the anvil 32 that serves as the receiver.
   When either one of the horn 31 and the anvil 32 is used as the receiver in the structure of the First Embodiment, the one that serves as the receiver is set to be movable forward to its extended position (the position closest to the conveyance path) from the very start of the discharging step, so that it is kept positioned in the extended position during the discharging step and the sealing step. Also, in the Second to Fourth Embodiments above, if the horn 31 or the anvil 32 is used as the receiver, the one that serves as the receiver can be kept positioned in the extended position during the discharging step and the sealing step, without being retracted from the extended position (the position closest to the conveyance path) that is set in the discharging step.
(2) In the above description, the bag (gas compartment-equipped bag) 11 has the cutout 19 which is formed in the films 17 and 18 on the front and back sides of the gas compartment 16. Nonetheless, a gas compartment-equipped bag in which the cutout 19 is formed in only one of the films can be processed by the present invention. In this case, when the gas is discharged into the gas compartment 16, out of the horn 31 and the anvil 32, the one disposed on the cutout 19 side is used as the nozzle, and the other one is used as the receiver (see (1) above).
(3) In the above description, the cutout 19 is formed in the upper end of the gas compartment 16; however, the cutout 19 can be formed somewhere else instead, and a hole (or a gas intake opening) can be also formed instead of the cutout 19.
(4) In the above description, the neck portion 16b is formed in the gas compartment 16. Nonetheless, the entire gas compartment 16 may have the same width as in the gas compartment-equipped bag discussed in Japanese Patent Nos. 4683899 and 4771785.
(5) In the above description, the gripper 21 that grips the sealed portion 12, in which the gas compartment 16 is formed, grips the sealed portion 12 so that the gripper goes across the gas compartment 16 horizontally. However, the gripper 21 can be formed so as instead to grip only the outside of the gas compartment 16 as in the bag conveyance gripper discussed in Japanese Patent Nos. 4683899 and 4771785.
(6) In the above description, only the gas compartment 16 is sealed by the ultrasonic sealing device. It, however, can be designed so that the bag mouth 14 is also clamped at the same time by the horn 31 and the anvil 32, so that the gas compartment 16 and the bag mouth 14 are sealed at the same time.
(7) In the above description, the air cylinder 37 is the drive source for moving the horn 31 and the anvil 32 of the ultrasonic sealing device forward and backward. A servo motor can be used instead as the drive source.
(8) In the above description, the gas sealing method and device constitutes part of a packaging method and a packaging device; however, the gas sealing method and device of the present invention can instead be configured as an independent gas sealing method or gas sealing device, being separated from the opening of the bag mouth and the filling of the bag with its contents. In this case, a suction cup that grabs the bag 11 at the bag face, a chuck that grasps the bag mouth, or the like can be used instead of the pair of left and right bag conveyance grippers 21 and 22 as the conveyance member for conveying the bag 11.
(9) In the above description, the gas sealing method and device according to the present invention are applied to a case that gas compartment-equipped bags are intermittently conveyed. The present invention can be also applied to a case that gas compartment-equipped bags are continuously conveyed at a steady rate (see, for instance, Japanese Laid-Open Patent Application 2009-161230). When a gas compartment-equipped bags are continuously conveyed, the ultrasonic sealing device, for instance, follows the movement of the gas compartment-equipped bags, and then returns, follows the next bag, and performs the required processing in the course of such movement.

### Reference Numerals

- 11: gas compartment-equipped bag
- 12, 13: sealed part on side edge
- 16: gas compartment
- 16a: gas introduction portion of gas compartment
- 16b: neck portion of gas compartment
- 16c: main portion of gas compartment
- 17 and 18: films constituting front and back sides of bag
- 19: cutout
- 21,22: bag conveyance gripper
- 31: horn of ultrasonic sealing device
- 32: anvil of ultrasonic sealing device
- 37: air cylinder
- 43, 48: hole (gas passage)
- 47, 52: discharge outlet
- 58, 59: groove

## Claims

1. A method for sealing a gas in a gas compartment-equipped bag, wherein
said method is for bags in which a gas compartment that extends in a longitudinal direction is integrally formed in a sealed portion of a side edge of each one of the bags, and a gas intake opening that communicates an outside of the bag with an inside of the gas compartment is formed in a film of a gas introduction portion of the gas compartment,
a discharge outlet of a nozzle connected to a pressurized gas supply source is placed against the gas introduction portion, and
a gas is discharged into the gas compartment through the gas intake opening to inflate the gas compartment, and an area near the gas intake opening is sealed to trap the gas inside the gas compartment;
**characterised in that**
a horn (31) and an anvil (32) of an ultrasonic sealing device are disposed on either side of the gas compartment-equipped bag,
a gas passage (43, 48) is formed in the horn and/or the anvil such that one end of the gas passage is connected to a pressurized gas supply source (46) and another end of the gas passage opens to a distal end thereof,
the horn and/or the anvil, in which the gas passage is formed, also function/functions as the nozzle,
said another end of the gas passage is the discharge outlet (47, 52), and
the horn and/or the anvil discharge/discharges the gas into the gas compartment and the horn and the anvil ultrasonically seal films surrounding the gas intake opening.

2. The method for sealing a gas in a gas compartment-equipped bag according to Claim 1, wherein
the gas intake opening is formed in films on both sides of the gas introduction portion,
the gas passage is formed in both the horn and the anvil,
both the horn and the anvil serve as the nozzle, and
both the horn and the anvil discharge the gas into the gas compartment.

3. The method for sealing a gas in a gas compartment-equipped bag according to Claim 2, wherein
when the gas is discharged into the gas compartment,
the distal ends of the horn and the anvil are brought to opposite and face each other at a specific distance that is greater than thickness of the films on both sides of the gas introduction portion, and
said distance is set so that the films on both sides of the gas introduction portion inflated by the discharging of the gas come in close contact with the distal ends of the horn and the anvil and an inflated state of the gas introduction portion is restricted to a flat shape; and
when the films surrounding the gas intake opening are ultrasonically sealed, the horn and the anvil are moved forward and clamp the films surrounding the gas intake opening with the distal ends of the horn and the anvil.

4. The method for sealing a gas in a gas compartment-equipped bag according to Claim 2, wherein
the horn and the anvil are movable back and forth with respect to the gas compartment-equipped bag,
the horn and the anvil are moved forward to discharge the gas out of the discharge outlet in a state that the films surrounding the gas intake opening are clamped at a specific biasing force,
a pressure of the gas causes the horn and the anvil to retract against the biasing force, widening a distance between distal ends thereof,
the distance between the distal ends of the horn and the anvil at this point is set so that the films on both sides of the gas introduction portion inflated by the discharging of the gas come in close contact with the distal ends of the horn and the anvil and the inflated state of the gas introduction portion is restricted to a flat shape, and
when the films surrounding the gas intake opening are ultrasonically sealed, the horn and the anvil are moved forward again and clamp the films surrounding the gas intake opening with the distal ends of the horn and the anvil.

5. The method for sealing a gas in a gas compartment-equipped bag according to Claim 1 or 2, wherein
the gas is discharged from the discharge outlet in a state that the films surrounding the gas intake opening are clamped by the distal ends of the horn and the anvil, and
longitudinal vibration energy is supplied to the horn.

6. The method for sealing a gas in a gas compartment-equipped bag according to Claim 1 or 2, wherein
grooves are formed in the distal end of the horn and/or the anvil, the gas is discharged from the discharge outlet in a state in which the films surrounding the gas intake opening are clamped by the distal ends of the horn and the anvil, thus creating, with a pressure of the gas, a gap between the films on both sides of the gas compartment on an inside of the grooves and discharging the gas into the gas compartment through the gap, then
vibration energy is supplied to the horn, thus sealing the films surrounding the gas intake opening, including portions inside of the grooves.

7. A device for sealing a gas in a gas compartment-equipped bag, in which:
the device for sealing is for bags in which a gas compartment that extends in a longitudinal direction is integrally formed in a sealed portion of a side edge of each one of the bags, and a gas intake opening that communicates an outside of the bag with an inside of the gas compartment is formed in a film of a gas introduction portion of the gas compartment,
the bags are intermittently conveyed along a predetermined conveyance path,
a discharge outlet of a nozzle connected to a pressurized gas supply source is placed against the gas introduction portion during the conveyance,
a gas is discharged into the gas compartment through the gas intake opening to inflate the gas compartment, and then
the area near the gas intake opening is sealed to trap the gas inside the gas compartment, wherein
said device comprises:
a bag conveyance device that intermittently conveys the gas compartment-equipped bags along the conveyance path, and
an ultrasonic sealing device that is provided near a predetermined stop position. along the conveyance path, in which:
a horn (32) and an anvil (32) of the ultrasonic sealing device are disposed opposite and face each other with the conveyance path in between and are moved forward or backward toward the gas compartment-equipped bag that is stopped at the stop position,
a gas passage (43, 48) is formed in the horn and/or the anvil such that one end thereof is connected to the pressurized gas supply source (46) and another end thereof opens to a distal end thereof,
the horn and/or the anvil, in which the gas passage is formed, also function/functions as the nozzle,
the other end of the gas passage is the discharge outlet, (47, 52) and
the gas may be discharged into the gas compartment by the horn and/or the anvil, and the films surrounding the gas intake opening may be ultrasonically sealed by the horn and anvil.

8. The device for sealing a gas in a gas compartment-equipped bag according to Claim 7, wherein
the bag conveyance device comprises a plurality of pairs of bag conveyance grippers that grip both side edges of each of the gas compartment-equipped bags and move the bags intermittently, and
the bag conveyance device intermittently conveys the gas compartment-equipped bags along the conveyance path.

9. The device for sealing a gas in a gas compartment-equipped bag according to Claim 7 or 8, wherein
the gas intake opening of the gas compartment-equipped bag is formed in films on both sides of the gas introduction portion,
the gas passage is formed in both the horn and the anvil, so that the horn and the anvil also function as the nozzle, and
both the horn and the anvil discharge the gas into the gas compartment.

10. The device for sealing a gas in a gas compartment-equipped bag according to Claim 9, wherein
the horn and the anvil are movable forward or backward between extended positions and retracted positions thereof,
when the gas is discharged into the gas compartment, the horn and the anvil are moved forward from the retracted positions and stop just short of the extended positions, the distal ends of the horn and the anvil at this point being opposite and face each other at a predetermined distance that is greater than thickness of the films on both sides of the gas introduction portion, with said distance being set so that the films on both sides of the gas introduction portion inflated by the discharging of the gas come in close contact with the distal ends of the horn and the anvil and the inflated state of the gas introduction portion is restricted to a flat shape, and
when the films surrounding the gas intake opening are ultrasonically sealed, the horn and the anvil are moved forward to the extended positions and clamp the films surrounding the gas intake opening so as to perform ultrasonic sealing, and after the ultrasonic sealing, the horn and the anvil are retracted to the retracted positions.

11. The device for sealing a gas in a gas compartment-equipped bag according to Claim 9, wherein
said device is further provided with a drive source for moving the horn and the anvil forward and backward, so that the horn and the anvil are moved forward or backward by the drive source between extended positions and retracted positions thereof, thus clamping the films surrounding the gas intake opening at a specific biasing force at the extended positions,
when the gas is discharged into the gas compartment, the pressure of the gas discharged from the discharge outlet causes the horn and the anvil to retract from the extended positions against the biasing force, a distance between the distal ends of the horn and the anvil is widened to a predetermined distance that is greater than the thickness of the films on both sides of the gas introduction portion, so that the films on both sides of the gas introduction portion inflated by the discharging of the gas come in close contact with the distal ends of the horn and the anvil and the inflated state of the gas introduction portion is restricted to a flat shape, and
when the films surrounding the gas intake opening are ultrasonically sealed, the horn and the anvil are moved forward again to the extended positions so as to perform ultrasonic sealing, and after the ultrasonic sealing, the horn and the anvil are retracted to the retracted positions.

12. The device for sealing a gas in a gas compartment-equipped bag according to any one of Claims 7 to 9, wherein
the horn and the anvil are movable forward or backward between extended positions and retracted positions thereof,
the horn and the anvil clamp the films surrounding the gas intake opening at the extended positions,
the gas is discharged from the discharge outlet at the extended positions, longitudinal vibration energy is supplied to the horn so as to perform ultrasonic sealing, and
after the ultrasonic sealing, the horn and the anvil arc retracted to the retracted positions.

13. The device for sealing a gas in a gas compartment-equipped bag according to any one of Claims 7 to 9, wherein
grooves are formed in the distal end of the horn and/or the anvil,
the horn and the anvil are movable forward or backward between extended positions and retracted positions,
the horn and the anvil clamp the films surrounding the gas intake opening at the extended positions and discharge the gas from the discharge outlet in this state, then
vibration energy is supplied to the horn, the pressure of the gas discharged from the discharge outlet creates gaps between the films on both sides of the gas compartment on the inside of the grooves, the films surrounding the gas intake opening, including portions inside of the grooves, are ultrasonically sealed, and after the ultrasonic sealing, the horn and the anvil are retracted to the retracted positions.

14. An ultrasonic sealing device for sealing a gas in a gas compartment-equipped bag, comprising:
a horn (31) and an anvil (32) which are disposed opposite and face each other and are movable back and forth,
a gas passage (43, 48) formed in the horn and/or the anvil such that one end thereof is connected to a pressurized gas supply source (46) and another end thereof opens to a distal end thereof, said other end of the gas passage being a discharge outlet (47, 52) for a pressurized gas.

## Patentansprüche

1. Verfahren zum Abdichten eines Gases in einem mit einem Gasraum ausgestatteten Beutel, wobei
das Verfahren für Beutel vorgesehen ist, in denen ein in einer Längsrichtung sich erstreckender Gasraum in einem abgedichteten Abschnitt einer Seitenkante jedes Beutels ausgebildet ist und eine Gaseinlass-Öffnung, die einen Außenbereich des Beutels und einen Innenbereich des Gasraums verbindet, in einer Folie eines Gaszufuhr-Abschnitts des Gasraums ausgebildet ist,
ein Entleerungsausgang einer Düse, die mit einer Druckgas-Versorgung verbunden ist, gegenüber dem Gaszufuhr-Abschnitt angeordnet ist, und
ein Gas durch die Gaseinlass-Öffnung zum Aufblasen des Gasraums in den Gasraum gefüllt wird und ein Bereich in der Nähe der Gaseinlass-Öffnung zum Einschließen des Gases in dem Gasraum abgedichtet ist,
**dadurch gekennzeichnet, dass**
eine Horn-Sonotrode (31) und ein Amboss (32) einer Ultraschall-Dichtungseinheit auf der einen oder der anderen Seite des mit einem Gasraum ausgestatteten Beutels angeordnet sind,
ein Gasdurchgang (43, 48) in der Horn-Sonotrode oder dem Amboss so ausgebildet wird, dass ein Ende des Gasdurchgangs mit einer Druckgas-Versorgung (46) verbunden ist und sich ein anderes Ende des Gasdurchgangs zu einem entfernten Ende hin öffnet,
die Horn-Sonotrode und/oder der Amboss, in dem der Gasdurchgang ausgebildet ist, auch als Düse funktionieren/funktioniert,
das andere Ende des Gasdurchgangs der Entleerungsausgang (47, 57) ist die Horn-Sonotrode und/oder der Amboss das Gas in den Gasraum leiten/leitet und die Horn-Sonotrode und der Amboss die Folien mit Ultraschall abdichten, die die Gas-Einlassöffnung umgeben.

2. Verfahren zum Abdichten eines Gases in einem mit einem Gasraum ausgestatteten Beutel nach Anspruch 1, wobei
die Gas-Einlassöffnung in Folien auf beiden Seiten des Gaszufuhr-Abschnitts ausgebildet ist,
der Gasdurchgang sowohl in der Horn-Sonotrode als auch dem Amboss ausgebildet ist,
sowohl die Horn-Sonotrode als auch der Amboss als die Düse dienen und sowohl die Horn-Sonotrode als auch der Amboss das Gas in den Gasraum leiten.

3. Verfahren zum Abdichten eines Gases in einem mit einem Gasraum ausgestatteten Beutel nach Anspruch 2, wobei,
wenn das Gas in den Gasraum geleitet wird,
die entfernten Enden der Horn-Sonotrode und des Amboss in einem bestimmten Abstand gegenüberliegend und einander zugewandt angeordnet sind, der größer als die Dicke der Folie auf beiden Seiten des Gaszufuhr-Abschnitts ist, und
der Abstand so eingestellt wird, dass die Folien auf beiden Seiten des Gaszufuhr-Abschnitts durch das Leiten des Gases in unmittelbare Berührung mit den entfernten Enden der Horn-Sonotrode und des Amboss gelangen und ein aufgeblasener
Zustand des Gaszufuhr-Abschnitts auf eine flache Form begrenzt wird; und
wenn die Folien, die den Gaszufuhr-Abschnitt umgeben, mit Ultraschall abgedichtet werden, die Horn-Sonotrode und der Amboss vorwärts bewegt werden und die Folien, die den Gaszufuhr-Abschnitt umgeben, mit den entfernten Enden der Horn-Sonotrode und des Amboss festklemmen.

4. Verfahren zum Abdichten eines Gases in einem mit einem Gasraum ausgestatteten Beutel nach Anspruch 2, wobei
die Horn-Sonotrode und der Amboss relativ zu dem mit einem Gasraum ausgestatteten Beutel vor oder zurück beweglich sind,
die Horn-Sonotrode und der Amboss zum Leiten des Gases aus dem Entleerungsausgang vorwärts in einen Zustand bewegt werden, sodass die Folien, die die Gaseinlass-Öffnung umgeben, mit einer bestimmten Vorspannkraft gehalten werden,
ein Gasdruck die Horn-Sonotrode und den Amboss gegen die Vorspannkraft zum Zurückziehen veranlassen, wodurch ein Abstand zwischen deren entfernten Enden vergrößert wird,
der Abstand zwischen den entfernten Enden der Horn-Sonotrode und des Amboss an dieser Stelle so eingestellt ist, dass die Folien auf beiden Seiten des Gaszufuhr-Abschnitts, der durch die Entleerung des Gases aufgeblasenwird, durch das Leiten des Gases in unmittelbare Berührung mit den entfernten Enden der Horn-Sonotrode und des Amboss gelangenund der gefüllte Zustand des Gaszufuhr-Abschnitts auf eine flache Form begrenzt wird, und
wenn die Folien, die die Gaseinlass-Öffnung umgeben, mit Ultraschall abgedichtet werden, die Horn-Sonotrode und der Amboss wieder vorwärts bewegt werden und die Folien, die die Gaseinlass-Öffnung umgeben, mit den entfernten Enden der Horn-Sonotrode und des Amboss festklemmen.

5. Verfahren zum Abdichten eines Gases ein einem mit einem Gasraum ausgestatteten Beutel nach Anspruch 1 oder 2, wobei
das Gas aus dem Entleerungsausgang in einem Zustand geleitet wird, sodass die Folien, die die Gaseinlass-Öffnung umgeben, durch die entfernten Enden der Horn-Sonotrode und des Amboss festgeklemmt werden, und
die Horn-Sonotrode mit longitudinaler Vibrationsenergie versorgt wird.

6. Verfahren zum Abdichten eines Gases in einem mit einem Gasraum ausgestatteten Beutel nach Anspruch 1 oder 2, wobei
in dem entfernten Ende der Horn-Sonotrode oder des Amboss Nuten gebildet sind, das Gas aus dem Entleerungsausgang in einem Zustand geleitet wird, in dem die Folien, die die Gaseinlass-Öffnung umgeben, durch die entfernten Enden der Horn-Sonotrode und des Amboss festgeklemmt werden, sodass mit einem Gasdruck ein Spalt zwischen den Folien auf beiden Seiten des Gasraums auf einer Innenseite der Nuten erzeugt wird und das Gas durch den Spalt in den Gasraum geleitet wird, und dann
die Horn-Sonotrode mit Vibrationsenergie versorgt wird, sodass die die Gaseinlass-Öffnung umgebenden Folien einschließlich der Abschnitte in den Nuten abgedichtet werden.

7. Vorrichtung zum Abdichten eines Gases in einem mit einem Gasraum ausgestatteten Beutel, wobei
die Vorrichtung zum Abdichten für Beutel vorgesehen ist, in denen ein in einer Längsrichtung sich erstreckender Gasraum in einem abgedichteten Abschnitt einer Seitenkante jedes Beutels ausgebildet ist und eine Gaseinlass-Öffnung, die einen Außenbereich des Beutels und einen Innenbereich des Gasraums verbindet, in einer Folie eines Gaszufuhr-Abschnitts des Gasraums ausgebildet ist,
die Beutel intermittierend längs eines vorgegeben Beförderungswegs bewegt werden,
ein Entleerungsausgang einer Düse, der mit einer Druckgas-Versorgung verbunden ist, während der Beförderung gegenüber dem Gaszufuhr-Abschnitt angeordnet ist,
ein Gas durch die Gaseinlass-Öffnung zum Füllen des Gasraums in den Gasraum geleitet wird, und dann
der Bereich in der Nähe der Gaseinlass-Öffnung zum Einschließen des Gases in dem Gasraum abgedichtet wird,
wobei die Vorrichtung umfasst:
eine Beutelbeförderungsvorrichtung, die die mit einem Gasraum ausgestatteten Beutel intermittierend längs des Beförderungswegs fortbewegt, und
eine Ultraschall-Dichtungsvorrichtung, die in der Nähe einer vorgegebenen Stoppposition längs des Beförderungswegs angeordnet ist, in der:
eine Horn-Sonotrode (31) und ein Amboss (32) der Ultraschall-Dichtungseinheit sich gegenüberliegend und einander zugewandt mit dem Beförderungsweg dazwischen angeordnet sind und vor oder zurück zu dem mit einem Gasraum ausgestatteten Beutel bewegt werden, der in der Stoppposition gehalten wird,
ein Gasdurchgang (43, 48) in der Horn-Sonotrode oder dem Amboss, der so ausgebildet ist, dass ein Ende des Gasdurchgangs mit der Druckgas-Versorgung (46) verbunden ist und sich ein anderes Ende des Gasdurchgangs zu einem entfernten Ende hin öffnet,
die Horn-Sonotrode und/oder der Amboss, in denen die Gasführung ausgebildet ist, auch als Düse funktionieren/funktioniert,
es sich bei dem anderen Ende desr Gasdurchgangs um den Entleerungsausgang (47, 57) handelt und
das Gas durch die Horn-Sonotrode oder den Amboss in den Gasraum geleitet werden kann und die Folien, die die Gaseinlass-Öffnung umgeben, mit Ultraschall durch die Horn-Sonotrode und den Amboss abgedichtet werden können.

8. Vorrichtung zum Abdichten eines Gases in einem mit einem Gasraum ausgestatteten Beutel nach Anspruch 7, wobei
die Beutelbeförderungsvorrichtung eine Vielzahl von Beutelbeförderungs-Greiferpaaren umfasst, die beide Seitenkanten jedes mit einem Gasraum ausgestatteten Beutels greifen und die Beutel intermittierend bewegen, und
die Beutelbeförderungsvorrichtung intermittierend die mit einem Gasraum ausgestatteten Beutel längs des Beutelbeförderungs-Wegs bewegt.

9. Vorrichtung zum Abdichten eines Gases in einem mit einem Gasraum ausgestatteten Beutel nach Anspruch 7 oder 8, wobei
die Gaseinlass-Öffnung des mit einem Gasraum ausgestatteten Beutels in Folien auf beiden Seiten des Gaszufuhr-Abschnitts ausgebildet wird,
die Gasführung sowohl in der Horn-Sonotrode als auch dem Amboss ausgebildet wird, sodass die Horn-Sonotrode und der Amboss als Düse funktionieren, und
sowohl die Horn-Sonotrode als der Amboss das Gas in den Gasraum leiten.

10. Vorrichtung zum Abdichten eines Gases in einem mit einem Gasraum ausgestatteten Beutel nach Anspruch 9, wobei
die Horn-Sonotrode und der Amboss vor oder zurück zwischen ausgefahrenen Positionen und zurückgefahrenen Positionen beweglich sind,
wenn das Gas in den Gasraum geleitet wird, die Horn-Sonotrode und der Amboss von den zurückgefahrenen Positionen vorwärts bewegt werden und kurz vor den ausgefahrenen Positionen halten, wobei die entfernten Enden der Horn-Sonotrode und des Amboss an dieser Stelle sich gegenüberliegend und mit einem vorgegebenen Abstand einander zugewandt angeordnet sind, wobei der Abstand die Dicke der Folien auf beiden Seiten des Gaszufuhr-Abschnitts übersteigt und so eingestellt ist, dass die Folien auf beiden Seiten des Gaszufuhr-Abschnitts, der durch das Leiten des Gases gefüllt wird, in unmittelbare Berührung mit den entfernten Enden der Horn-Sonotrode und des Amboss gelangen und der gefüllte Zustand des Gaszufuhr-Abschnitts auf eine flache Form begrenzt wird, und
wenn die Folien, die die Gaseinlass-Öffnung umgeben, mit Ultraschall abgedichtet werden, die Horn-Sonotrode und der Amboss in die ausgefahrenen Positionen vorwärts bewegt werden und die Folien festklemmen, die die Gaseinlass-Öffnung umgeben, sodass sie eine Abdichtung durch Ultraschall ausführen, und wobei die Horn-Sonotrode und der Amboss nach dem Abdichten durch Ultraschall in die eingefahrenen Positionen zurückgefahren werden.

11. Vorrichtung zum Abdichten eines Gases in einem mit einem Gasraum ausgestatteten Beutel nach Anspruch 9, wobei
der Einheit ferner eine Antriebsquelle zum Bewegen der Horn-Sonotrode und des Amboss vor oder zurück bereitgestellt wird, sodass die Horn-Sonotrode und der Amboss durch die Antriebsquelle vor oder zurück zwischen den ausgefahrenen und den zurückgefahrenen Positionen bewegt werden, sodass die Folien, die die Gaseinlass-Öffnung umgeben, mit einer bestimmten Vorspannkraft an den ausgefahrenen Positionen festgeklemmt werden,
wenn das Gas in den Gasraum geleitet wird, der Druck des aus dem Entleerungsausgang geleiteten Gases die Horn-Sonotrode und den Amboss gegen die Vorspannkraft zum Zurückfahren aus den ausgefahrenen Positionen veranlasst, wobei ein Abstand zwischen den entfernten Enden der Horn-Sonotrode und des Amboss auf einen vorgegebenen Abstand vergrößert wird, der die Dicke der Folie auf beiden Seiten des Gaszufuhr-Abschnitts übersteigt, sodass die Folien auf beiden Seiten des Gaszufuhr-Abschnitts, der durch die Entleerung des Gases gefüllt wird, in unmittelbare Berührung mit den entfernten Endes der Horn-Sonotrode und des Amboss gelangen und der gefüllte Zustand des Gaszufuhr-Abschnitts auf eine flache Form begrenzt wird, und
wenn die Folien, die die Gaseinlass-Öffnung umgeben, mit Ultraschall abgedichtet werden, die Horn-Sonotrode und der Amboss wieder vorwärts in die ausgefahrenen Positionen bewegt werden, um die Ultraschall-Abdichtung auszuführen, und die Horn-Sonotrode und der Amboss nach der Ultraschall-Abdichtung in die zurückgefahrenen Positionen zurückgefahren werden.

12. Vorrichtung zum Abdichten eines Gases in einem mit einem Gasraum ausgestatteten Beutel nach einem der Ansprüche 7 bis 9, wobei
die Horn-Sonotrode und der Amboss zwischen den ausgefahrenen Positionen und den zurückgefahrenen Positionen vor oder zurück beweglich sind,
die Horn-Sonotrode und der Amboss die Folien, die die Gaseinlass-Öffnung umgeben, an den ausgefahrenen Positionen festklemmen,
das Gas aus dem Entleerungsausgang an den ausgefahrenen Positionen geleitet wird,
die Horn-Sonotrode zum Ausführen der Ultraschall-Abdichtung mit longitudinaler Vibrationsenergie versorgt wird, und
die Horn-Sonotrode und der Amboss nach der Ultraschallabdichtung in die zurückgefahrenen Positionen zurückgefahren werden.

13. Vorrichtung zum Abdichten eines Gases in einem mit einem Gasraum ausgestatteten Beutel nach einem der Ansprüche 7 bis 9, wobei
in dem entfernten Ende der Horn-Sonotrode oder des Amboss Nuten ausgebildet sind,
der Schalltrichter und der Amboss zwischen den ausgefahrenen und den zurückgefahrenen Positionen vor oder zurück beweglich sind,
die Horn-Sonotrode und der Amboss die Folien, die die Gaseinlass-Öffnung umgeben, an den ausgefahrenen Positionen festklemmen und das Gas in diesem Zustand aus dem Entleerungsausgang leiten,
die Horn-Sonotrode mit Vibrationsenergie versorgt wird und der Druck des aus dem Entleerungsausgang geleiteten Gases zwischen den Folien auf beiden Seiten des Gasraums auf der Innenseite der Nuten Spalte erzeugt, wobei die Folien mit Ultraschall abgedichtet werden, die die Gaseinlass-Öffnung einschließlich den Abschnitten innerhalb der Nuten umgeben, und die Horn-Sonotrode und der Amboss nach der Ultraschall-Abdichtung in die eingefahrenen Positionen eingefahren werden.

14. Ultraschall-Dichtungsvorrichtung zum Abdichten eines Gases in einem mit einem Gasraum ausgestatteten Beutel, wobei die Dichtungseinheit umfasst:
eine Horn-Sonotrode (31) und einen Amboss (32), die sich gegenüberliegend und einander zugewandt angeordnet und vor oder zurück beweglich sind, und
ein Gasdurchgang (43, 48), die in der Horn-Sonotrode oder dem Amboss ausgebildet wird, sodass ein Ende mit einer Druckgas-Versorgung (46) verbunden ist und sich anderes Ende zu einem entfernten Ende öffnet, es sich bei dem anderen Ende des Gasdurchgangs um einen Entleerungsausgang (47, 57) für ein unter Druck stehendes Gas handelt.

## Revendications

1. Procédé de scellement d'un gaz dans un sac équipé d'un compartiment à gaz, où
ledit procédé est destiné à des sacs dans lesquels un compartiment à gaz qui s'étend dans une direction longitudinale est formé intégralement dans une partie scellée d'un bord latéral de chacun des sacs, et un orifice d'admission de gaz, qui fait communiquer un côté extérieur de sac avec un côté intérieur du compartiment à gaz, est formé dans un film d'une partie d'introduction de gaz du compartiment à gaz,
une sortie de décharge d'une buse connectée à une source d'alimentation de gaz pressurisé est placée contre la partie d'introduction de gaz, et
un gaz est déchargé dans la compartiment de gaz à travers l'orifice d'admission de gaz, et la zone proche de l'orifice d'admission de gaz est scellée pour piéger le gaz à l'intérieur du compartiment à gaz ;
**caractérisé en ce que**
une sonotrode (31) et une enclume (32) d'une unité de soudage par ultrasons sont disposés de chaque côté du sac équipé du compartiment à gaz,
un passage de gaz (43, 48) est formé dans la sonotrode et/ou l'enclume de sorte qu'une extrémité du passage de gaz est connectée à une source d'alimentation de gaz pressurisé (46) et une autre extrémité du passage de gaz s'ouvre sur une extrémité distale de celui-ci,
la sonotrode et/ou l'enclume dans laquelle /lesquelles le passage de gaz est formé fonctionne /fonctionnent également comme la buse,
ladite autre extrémité du passage de gaz est la sortie de décharge (47, 52) et
la sonotrode et/ou l'enclume décharge / déchargent le gaz dans le compartiment à gaz, et la sonotrode et l'enclume scellent par ultrasons les films entourant l'orifice d'admission de gaz.

2. Procédé de scellement d'un gaz dans un sac équipé d'un compartiment à gaz selon la revendication 1, dans lequel
l'orifice d'admission de gaz est formé dans des films sur les deux côtés de la partie d'introduction de gaz,
le passage de gaz est formé à la fois dans la sonotrode et l'enclume,
à la fois, la sonotrode et l'enclume servent de buse, et
à la fois la sonotrode et l'enclume déchargent le gaz dans le compartiment à gaz.

3. Procédé de scellement d'un gaz dans un sac équipé d'un compartiment à gaz selon la revendication 2, où,
lorsque le gaz est déchargé dans le compartiment à gaz,
les extrémités distales de la sonotrode et de l'enclume sont ramenées de l'état opposé l'une à l'autre et se font face l'une l'autre à une distance spécifique qui est supérieure à l'épaisseur des films sur les deux côtés de partie d'introduction de gaz, et
ladite distance est réglée de sorte que les films sur les deux côtés de partie d'introduction de gaz dilatée par le déchargement du gaz arrivent en contact proche avec les extrémités distales de la sonotrode et de l'enclume et un état dilaté de la partie d'introduction de gaz se restreint à une forme plate ; et
lorsque les films entourant l'orifice d'admission de gaz sont soudés par ultrasons, la sonotrode et l'enclume sont déplacés vers l'avant et serrent les films entourant l'orifice d'admission de gaz avec les extrémités distales de la sonotrode et l'enclume.

4. Procédé de scellement d'un gaz dans un sac équipé d'un compartiment à gaz selon la revendication 2, où
la sonotrode et l'enclume peuvent être déplacés vers l'arrière et vers l'avant par rapport au sac équipé d'un compartiment à gaz,
la sonotrode et l'enclume sont déplacés vers l'avant pour décharger le gaz hors de la sortie de décharge dans un état de sorte où les films entourant l'orifice d'admission de gaz sont serrés avec une force de polarisation spécifique,
une pression du gaz fait en sorte que la sonotrode et l'enclume se rétractent sous l'influence de la force de polarisation, élargissant une distance entre leurs extrémités distales,
la distance entre les extrémités distales de la sonotrode et l'enclume à ce point est réglée de sorte que les films sur les deux côtés de la partie d'introduction de gaz dilatée par la décharge du gaz viennent en contact proche avec les extrémités distales de la sonotrode et de l'enclume et l'état dilaté de la partie d'introduction de gaz est restreint à une forme plate, et
lorsque les films entourant l'orifice d'admission de gaz sont soudés par ultrasons, la sonotrode et l'enclume sont de nouveau déplacés vers l'avant et serrent les films entourant l'orifice d'admission de gaz avec les extrémités distales de la sonotrode et l'enclume.

5. Procédé de scellement d'un gaz dans un sac équipé d'un compartiment à gaz selon la revendication 1 ou 2, où
le gaz est déchargé de la sortie de décharge dans un état tel que les films entourant l'orifice d'admission de gaz sont serrés par les extrémités distales de la sonotrode et l'enclume, et
une énergie de vibration longitudinale est délivrée à la sonotrode.

6. Procédé de scellement d'un gaz dans un sac équipé d'un compartiment à gaz selon la revendication 1 ou 2, où
des rainures sont formées sur l'extrémité distal de la sonotrode et/ou de l'enclume, le gaz est déchargé de la sortie de décharge dans un état dans lequel les films entourant l'orifice d'admission de gaz sont serrés par les extrémités distales de la sonotrode et l'enclume, créant ainsi, avec une pression du gaz, une brèche entre les films sur les deux côtés du compartiment à gaz sur un côté intérieur des rainures et la décharge du gaz dans le compartiment à gaz à travers la brèche, puis
une énergie de vibration est délivrée à la sonotrode, soudant ainsi les films entourant l'orifice d'admission de gaz, incluant des parties à l'intérieur des rainures.

7. Unité pour sceller un gaz dans un sac équipé d'un compartiment à gaz, dans lequel :
l'unité pour sceller est destinée à des sacs, dans lesquels un compartiment à gaz qui s'étend dans une direction longitudinale est formé intégralement dans une partie soudée d'un bord latéral de chacun des sacs, et un orifice d'admission de gaz qui fait communiquer un côté extérieur de sac avec un côté intérieur de compartiment à gaz est formé dans un film d'une partie d'introduction de gaz du compartiment à gaz,
les sacs sont convoyés par intermittence le long d'un trajet de convoyage prédéterminé,
une sortie de décharge d'une buse connectée à une source d'alimentation en gaz pressurisé est placée contre la partie d'introduction de gaz durant le convoyage,
un gaz est déchargé dans le compartiment à gaz à travers l'orifice d'admission de gaz pour dilater le compartiment à gaz, et ensuite
la zone près de l'orifice d'admission de gaz est scellée pour piéger le gaz à l'intérieur du compartiment à gaz, où
ladite unité comprend :
une unité de convoyage de sacs qui transporte par intermittence les sacs équipés d'un compartiment à gaz le long d'un trajet de convoyage, et
une unité de soudage par ultrasons qui est agencée près d'une position d'arrêt prédéterminée le long du trajet de convoyage, dans lequel :
une sonotrode (31) et une enclume (32) de l'unité de soudage par ultrasons sont disposées opposées l'une à l'autre et se font face l'une l'autre avec le trajet de convoyage entre elles et sont déplacées vers l'avant ou l'arrière vers le sac équipé d'un compartiment à gaz qui est arrêté à la position d'arrêt,
un passage de gaz (43, 48) est formé dans la sonotrode et/ou l'enclume de sorte qu'une de ses extrémités est connectée à la source d'alimentation en gaz pressurisé (46) et son autre extrémité ouvre vers une extrémité distale de celui-ci
la sonotrode et/ou l'enclume, dans lesquels le passage de gaz est formé, fonctionne / fonctionnent également comme une buse,
l'autre extrémité du passage de gaz est la sortie de décharge (47, 52), et
le gaz peut être déchargé dans le compartiment à gaz par la sonotrode et/ou l'enclume, et les films entourant l'orifice d'admission de gaz peuvent être soudés par ultrasons par la sonotrode et l'enclume.

8. Unité pour sceller un gaz dans un sac équipé d'un compartiment à gaz selon la revendication 7, où
l'unité de convoyage de sacs comprend une pluralité de paires de préhenseurs de sac pour le convoyage qui saisissent les deux bords latéraux des sacs équipés d'un compartiment à gaz et déplacent les sacs par intermittence, et
l'unité de convoyage de sacs convoie par intermittence les sacs équipés d'un compartiment à gaz le long du trajet de convoyage.

9. Unité pour sceller un gaz dans un sac équipé d'un compartiment à gaz selon la revendication 7 ou 8, où
l'orifice d'admission de gaz du sac équipé d'un compartiment à gaz est formé dans des films sur les deux côtés de la partie d'introduction de gaz,
le passage de gaz est formé à la fois dans la sonotrode et dans l'enclume, de sorte que la sonotrode et l'enclume fonctionnent également comme la buse, et
à la fois la sonotrode et l'enclume déchargent le gaz dans le compartiment à gaz.

10. Unité pour sceller un gaz dans un sac équipé d'un compartiment à gaz selon la revendication 9, où
la sonotrode et l'enclume peuvent se déplacer vers l'avant ou vers l'arrière entre des positions étendues et des positions rétractées de celles-ci,
lorsque le gaz est déchargé dans le compartiment à gaz, la sonotrode et l'enclume sont déplacées vers l'avant à partir des positions rétractées et s'arrêtent juste à peu de distance des positions étendues, les extrémités distales de la sonotrode et l'enclume à ce point étant opposées l'une à l'autre et se font face l'une à l'autre à une distance prédéterminée qui est supérieure à l'épaisseur des films sur les deux côtés de la partie d'introduction de gaz, avec ladite distance étant réglée de sorte que les films sur les deux côtés de la partie d'introduction de gaz dilatée par la décharge du gaz viennent en contact proche avec les extrémités distales de la sonotrode et l'enclume et l'état dilaté de la partie d'introduction de gaz est restreint à une forme plate, et
lorsque les films entourant l'orifice d'admission de gaz sont soudés par ultrasons, la sonotrode et l'enclume sont déplacées vers l'avant vers les positions étendues et serrent les films entourant l'orifice d'admission de gaz de sorte à réaliser un soudage par ultrasons, et après la soudure par ultrasons, la sonotrode et l'enclume sont rétractées vers les positions rétractées.

11. Unité pour sceller un gaz dans un sac équipé d'un compartiment à gaz selon la revendication 9, où
ladite unité est en outre pourvue d'une source d'entraînement pour déplacer la sonotrode et l'enclume vers l'avant et vers l'arrière, de sorte que la sonotrode et l'enclume sont déplacés vers l'avant ou l'arrière par la source d'entraînement entre leurs positions étendues et leurs positions rétractées, serrant ainsi les films entourant l'orifice d'admission de gaz avec une force de prétension spécifique aux positions étendues,
lorsque le gaz est déchargé dans le compartiment à gaz, la pression du gaz déchargé fait en sorte que la sonotrode et l'enclume se rétractent à partir des positions étendues vis-à-vis de la force de prétension, une distance entre les extrémités distales de la sonotrode et l'enclume est élargie jusqu'à une distance prédéterminée qui est supérieure à l'épaisseur des films sur les deux côtés de la partie d'introduction de gaz, de sorte que les films sur les deux côtés de la partie d'introduction de gaz dilatée par la décharge du gaz viennent en contact proche avec les extrémités distales de la sonotrode et de l'enclume et l'état dilaté de la partie d'introduction de gaz se restreint à une forme plate, et
lorsque les films entourant l'orifice d'admission de gaz sont soudés par ultrasons, la sonotrode et l'enclume sont de nouveau déplacées vers l'avant vers les positions étendues de sorte à effectuer un soudage par ultrasons et après le soudage par ultrasons, la sonotrode et l'enclume sont rétractées vers les positions rétractées.

12. Unité pour sceller un gaz dans un sac équipé d'un compartiment à gaz selon l'une quelconque des revendications 7 à 9, où
la sonotrode et l'enclume peuvent se déplacer vers l'avant ou vers l'arrière entre leurs positions étendues et leurs positions rétractées,
la sonotrode et l'enclume serrent les films entourant l'orifice d'admission de gaz aux positions étendues,
le gaz est déchargé de la sortie de décharge aux positions étendues,
une énergie de vibration longitudinale est fournie à la sonotrode de sorte à réaliser un soudage par ultrasons, et
après le soudage aux ultrasons, la sonotrode et l'enclume sont rétractées vers les positions rétractées.

13. Unité pour sceller un gaz dans un sac équipé d'un compartiment à gaz selon l'une quelconque des revendications 7 à 9, où
des rainures sont formées à l'extrémité distale de la sonotrode et/ou l'enclume,
la sonotrode et l'enclume peuvent se déplacer vers l'avant ou vers l'arrière entres des positions étendues et des positions rétractées,
la sonotrode et l'enclume serrent les films entourant l'orifice d'admission de gaz aux positions étendues et déchargent le gaz de la sortie de décharge dans cet état, puis
une énergie de vibration est fournie à la sonotrode, la pression du gaz déchargé de la sortie de décharge crée des brèches entre les films sur les deux côtés du compartiment à gaz sur l'intérieur des rainures, les films entourant l'orifice d'admission de gaz, y compris les parties à l'intérieur des rainures, sont soudées par ultrasons, et après la soudure par ultrasons, la sonotrode et l'enclume sont rétractées dans les positions rétractées.

14. Unité de soudage par ultrasons pour le scellement d'un gaz dans un sac équipé d'un compartiment à gaz, l'unité comprenant :
une sonotrode (31) et une enclume (32) qui sont disposées opposées l'une à l'autre et se font face l'une l'autre et peuvent se déplacer vers l'arrière et l'avant, et
un passage de gaz (43, 48) formé dans la sonotrode et/ou l'enclume de sorte qu'une de ses extrémités est connectée à une source d'alimentation en gaz pressurisé (46) et son autre extrémité s'ouvre sur une extrémité distale de celles-ci, ladite autre extrémité du passage de gaz étant une sortie de décharge (47, 52) pour un gaz pressurisé.
